# EUROPEAN PATENT APPLICATION

(11) **EP 4 845 247 A1**
(43) Date of publication of application: **25.11.2026**
(21) Application number: 24923419.6
(22) Date of filing: 30.10.2024
(51) Int. Cl.: H04W 56/00, H04W 84/06, H04B 7/185

(54) **COMMUNICATION METHOD AND DEVICE**

(30) Priority: 06.02.2024 CN 202410173478
(71) Applicant: Huawei Technologies Co., Ltd., Shenzhen, Guangdong 518129 (CN)
(72) Inventor: SHI, Meng, Shenzhen, Guangdong 518129 (CN); ZHANG, Xiaoyu, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Huawei European IPR
(86) International application number: PCT/CN2024/128526
(87) International publication number: WO 2025/167215

(57) **Abstract**

A communication method and apparatus are provided. The method includes: A first apparatus may receive first information and second information from a second apparatus. The first information may indicate A SSBs, A is a quantity of areas in a coverage range L of the second apparatus, and A is an integer greater than or equal to 2. The second information may indicate B SSBs that are not transmitted among the A SSBs in the coverage range L, and B is a positive integer. Then, the first apparatus may determine, based on the first information and the second information, SSBs corresponding to a plurality of first areas in the coverage range L, and detect an SSB corresponding to all or part of the plurality of first areas. According to the method, when there is an area in which no SSB is sent in the coverage range L, the first apparatus may accurately determine, based on the first information and the second information, a correspondence between each area and an SSB in the coverage range of the second apparatus.

## Description

### CROSS-REFERENCE TO RELATED APPLICATIONS

This application claims priority to Chinese Patent Application No. 202410173478.8, filed with the China National Intellectual Property Administration on February 6, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless communication system, an access network device may send measurement configuration information to a terminal, and the terminal may measure a synchronization signal and physical broadcast channel (physical broadcast channel, PBCH) block (synchronization signal and PBCH block, SSB) based on the measurement configuration information to implement mobility management. Because SSBs are not consecutive in the time domain, the terminal does not need to continuously search for and measure the SSBs in the time domain, but measures the SSBs in a measurement time window in which the SSBs can be locked. Therefore, currently, an SSB-based measurement timing configuration (SSB-based measurement timing configuration, SMTC) is introduced in the measurement configuration information of the SSB, and the SMTC may be used to configure a measurement time window. In this way, the terminal may perform SSB measurement in the measurement time window configured by using the SMTC.

For a non-terrestrial network (non-terrestrial network, NTN), the NTN provides seamless coverage for terminals by deploying functions or part of the functions of the access network device on a non-terrestrial device such as a high altitude platform station or a satellite. However, using the satellite as an example, because the coverage range of the satellite is larger, a quantity of beams is large. For example, the quantity of beams may reach hundreds or even thousands. How to determine a correspondence between an area and an SSB in a communication system like the NTN needs to be further studied.

### SUMMARY

This application provides a communication method and apparatus, to determine a correspondence between an area and an SSB in a communication system like an NTN.

**According to a first aspect**, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement some or all of functions of the terminal. The method may include: The first apparatus may receive first information and second information from a second apparatus. The first information indicates A SSBs, A may be a quantity of areas in a coverage range L of the second apparatus, and A may be an integer greater than or equal to 2. The second information may indicate B SSBs that are not transmitted among the A SSBs in the coverage range L, and B is a positive integer. Then, the first apparatus may determine, based on the first information and the second information, SSBs corresponding to a plurality of first areas in the coverage range L, and detect an SSB corresponding to all or part of the plurality of first areas. The second information may alternatively be expressed as indicating (A-B) SSBs that are transmitted among the A SSBs in the coverage range L, to determine the B SSBs that are not transmitted.

According to the method, when there is an area in which no SSB is sent in the coverage range L, the first apparatus may accurately determine, based on the first information and the second information, a correspondence between each area and an SSB in the coverage range of the second apparatus, to determine coverage information of an area in which the first apparatus is located and coverage information around the area. In this way, mobility management performance can be improved, accurate SSB measurement can be implemented, and measurement overheads can be reduced.

In a possible design, the first information may indicate a plurality of bits corresponding to a plurality of SSBs, the plurality of SSBs may include the A SSBs, and bit statuses of A bits in the plurality of bits may indicate the A SSBs. According to this design, the first information may accurately indicate the A SSBs.

In a possible design, the second information may indicate at least one bit corresponding to at least one SSB, the at least one SSB may include the B SSBs, and bit statuses of B bits in the at least one bit may indicate the B SSBs. According to this design, the second information may accurately indicate the B SSBs.

In a possible design, when a correspondence between the A areas and the A SSBs in the coverage range of the second apparatus is variable, the method may further include: The first apparatus may receive third information from the second apparatus. The third information may indicate a correspondence between M groups of bits and M pieces of indication information. M may be a quantity of areas in the coverage range L along a first direction, the first direction may be a movement direction of the second apparatus, an i^{th} piece of indication information in the M pieces of indication information may indicate a correspondence between A areas i and the A SSBs, the A areas i may be A areas in a coverage range of the second apparatus in a time period i, and a value of i is any integer from 1 to M. In this case, the second information may be one of the M pieces of indication information, and the at least one bit may be one group of bits in the M groups of bits that corresponds to the second information. According to this design, the second information may be one of the M pieces of indication information, to indicate the correspondence between the A areas i and the A SSBs, and may also implicitly indicate the at least one bit, thereby reducing signaling overheads.

In a possible design, when a correspondence between the A areas and the A SSBs in the coverage range of the second apparatus remains unchanged, the second information may indicate M groups of bits. M may be a quantity of areas in the coverage range L along a first direction, and the first direction is the movement direction of the second apparatus. The M groups of bits may correspond to M time periods in chronological order. The at least one bit may be one group of bits in the M groups of bits that corresponds to an earliest time period in the M time periods. According to this design, the first apparatus may quickly and accurately determine the at least one bit based on the second information.

In a possible design, the method may further include: The first apparatus may determine fourth information based on the second information. The fourth information may indicate one group of bits in the M groups of bits. The one group of bits indicated by the fourth information indicates D SSBs that are not transmitted among the A SSBs in a coverage range P of the second apparatus, and D is a positive integer. A second time period in which the second apparatus covers the coverage range P may be later than a first time period in which the second apparatus covers the coverage range L. A is a quantity of areas in the coverage range P. Then, the first apparatus may determine, based on the first information and the fourth information, SSBs corresponding to a plurality of second areas in the coverage range P, and detect an SSB corresponding to all or part of the plurality of second areas. According to this design, when the coverage range of the second apparatus changes with time, the first apparatus may obtain M groups of bits, and the M groups of bits may respectively indicate SSBs that are not transmitted in coverage ranges of the second apparatus in different time periods. In this way, the second apparatus may not need to send a plurality of groups of updated SSB bitmaps, thereby reducing signaling overheads, and reducing receive power of the first apparatus.

In a possible design, the first apparatus may determine the fourth information based on the second information and K. K may be determined based on a quantity of areas spanned by the second apparatus from the first time period to the second time period. According to this design, the first apparatus may quickly and accurately determine the fourth information.

According to a second aspect, an embodiment of this application provides a communication method. The method may be applied to a second apparatus. The second apparatus may be an access network device or a module (for example, a circuit, a chip, a chip system, or a processor) in the access network device, or may be a logical node, a logical module, or software that can implement all or part of functions of the access network device. The method may include: The second apparatus may send first information and second information to a first apparatus. The first information may indicate A SSBs, A may be a quantity of areas in a coverage range L of the second apparatus, and A may be an integer greater than or equal to 2. The second information may indicate B SSBs that are not transmitted among the A SSBs in the coverage range L, and B is a positive integer. The first information and the second information may be used to determine SSBs corresponding to a plurality of first areas in the coverage range L. The second information may alternatively be expressed as indicating (A-B) SSBs that are transmitted among the A SSBs in the coverage range L, to determine the B SSBs that are not transmitted.

In a possible design, the first information may indicate a plurality of bits corresponding to a plurality of SSBs, the plurality of SSBs may include the A SSBs, and bit statuses of A bits in the plurality of bits may indicate the A SSBs.

In a possible design, the second information may indicate at least one bit corresponding to at least one SSB, the at least one SSB may include the B SSBs, and bit statuses of B bits in the at least one bit may indicate the B SSBs.

In a possible design, when a correspondence between the A areas and the A SSBs in the coverage range of the second apparatus is variable, the method may further include: The second apparatus may send third information to the first apparatus. The third information may indicate a correspondence between M groups of bits and M pieces of indication information. M may be a quantity of areas in the coverage range L along a first direction, and the first direction is a movement direction of the second apparatus. An i^{th} piece of indication information in the M pieces of indication information may indicate a correspondence between A areas i and the A SSBs, the A areas i may be A areas in a coverage range of the second apparatus in a time period i, and a value of i is any integer from 1 to M. The second information may be one of the M pieces of indication information, and the at least one bit is one group of bits in the M groups of bits that corresponds to the second information.

In a possible design, when a correspondence between the A areas and the A SSBs in the coverage range of the second apparatus remains unchanged, the second information may indicate M groups of bits. M may be a quantity of areas in the coverage range L along a first direction, and the first direction is a movement direction of the second apparatus. The M groups of bits may correspond to M time periods in chronological order. The at least one bit may be one group of bits in the M groups of bits that corresponds to an earliest time period in the M time periods.

In a possible design, the second information may be used to determine fourth information. The fourth information may indicate one group of bits in the M groups of bits, the one group of bits indicated by the fourth information may indicate D SSBs that are not transmitted among the A SSBs in a coverage range P of the second apparatus, and D is a positive integer. A second time period in which the second apparatus covers the coverage range P may be later than a first time period in which the second apparatus covers the coverage range L, and A may be a quantity of areas in the coverage range P. The first information and the fourth information may be used to determine SSBs corresponding to a plurality of second areas in the coverage range P.

In a possible design, the second information and K may be used to determine the fourth information. K may be determined based on a quantity of areas spanned by the second apparatus from the first time period to the second time period.

**According to a third aspect**, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement all or part of functions of the terminal. The method may include: The first apparatus receives fifth information and sixth information from a second apparatus. The fifth information may indicate A SSBs, A may be a quantity of areas in a coverage range L of the second apparatus, and A may be an integer greater than or equal to 2. The sixth information may indicate C SSBs that are transmitted among the A SSBs in the coverage range L, and C is a positive integer. Then, the first apparatus may determine, based on the fifth information and the sixth information, SSBs corresponding to a plurality of first areas in the coverage range L, and detect an SSB corresponding to all or part of the plurality of first areas. The sixth information may alternatively be expressed as indicating (A-C) SSBs that are not transmitted among the A SSBs in the coverage range L, to determine the C SSBs that are transmitted.

According to the method, when there is an area in which no SSB is sent in the coverage range L, the first apparatus may accurately determine, based on the fifth information and the sixth information, a correspondence between each area and an SSB in the coverage range of the second apparatus, to determine coverage information of an area in which the first apparatus is located and coverage information around the area. In this way, mobility management performance can be improved, accurate SSB measurement can be implemented, and measurement overheads can be reduced.

In a possible design, the fifth information may indicate a plurality of bits corresponding to a plurality of SSBs, the plurality of SSBs may include the A SSBs, and bit statuses of A bits in the plurality of bits may indicate the A SSBs. According to this design, the fifth information may accurately indicate the A SSBs.

In a possible design, the sixth information may indicate at least one bit corresponding to at least one SSB, the at least one SSB may include the C SSBs, and bit statuses of C bits in the at least one bit may indicate the C SSBs. According to this design, the sixth information may accurately indicate the C SSBs.

**According to a fourth aspect**, an embodiment of this application provides a communication method. The method may be applied to a second apparatus. The second apparatus may be an access network device or a module (for example, a circuit, a chip, a chip system, or a processor) in the access network device, or may be a logical node, a logical module, or software that can implement all or part of functions of the access network device. The method may include: The second apparatus sends fifth information and sixth information to a first apparatus. The fifth information may indicate A SSBs, A is a quantity of areas in the coverage range L of the second apparatus, and A is an integer greater than or equal to 2. The sixth information may indicate C SSBs that are transmitted among the A SSBs in the coverage range L, and C is a positive integer. The fifth information and the sixth information may be used to determine SSBs corresponding to a plurality of first areas in the coverage range L.

In a possible design, the fifth information may indicate a plurality of bits corresponding to a plurality of SSBs, the plurality of SSBs may include the A SSBs, and bit statuses of A bits in the plurality of bits may indicate the A SSBs.

In a possible design, the sixth information may indicate at least one bit corresponding to at least one SSB, the at least one SSB may include the C SSBs, and bit statuses of C bits in the at least one bit may indicate the C SSBs.

**According to a fifth aspect**, this application provides a communication apparatus. The communication apparatus may be a terminal or a module (for example, a circuit, a chip, a chip system, or a processor) in the terminal, or may be a logical node, a logical module, or software that can implement all or part of functions of the terminal. The communication apparatus has a function of implementing the first aspect or the third aspect. For example, the communication apparatus includes a corresponding module, unit, or means for performing the operations in the first aspect or the third aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive a signal, to implement communication between the communication apparatus and another apparatus. The processing unit may be configured to perform some internal operations of the communication apparatus. Functions performed by the processing unit and the interface unit may correspond to the operations in the first aspect or the third aspect.

In a possible design, the communication apparatus includes a processor, and the processor may be configured to be coupled to a memory. The memory may store a computer program or instructions necessary for implementing the functions in the first aspect or the third aspect. The processor may execute the computer program or the instructions stored in the memory. When the computer program or the instructions are executed, the communication apparatus is caused to implement the method in any possible design of the first aspect or the third aspect.

In a possible design, the communication apparatus includes a processor and a memory. The memory may store a computer program or instructions necessary for implementing the functions in the first aspect or the third aspect. The processor may execute the computer program or the instructions stored in the memory. When the computer program or the instructions are executed, the communication apparatus is caused to implement the method in any possible design of the first aspect or the third aspect.

In a possible design, the communication apparatus includes a processor and an interface circuit. The processor is configured to communicate with another apparatus through the interface circuit, and perform the method in any possible design of the first aspect or the third aspect.

**According to a sixth aspect**, this application provides a communication apparatus. The communication apparatus may be an access network device or a module (for example, a circuit, a chip, a chip system, or a processor) in the access network device, or may be a logical node, a logical module, or software that can implement all or part of functions of the access network device. The communication apparatus has a function of implementing the second aspect or the fourth aspect. For example, the communication apparatus includes a corresponding module, unit, or means for performing the operations in the second aspect or the fourth aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive a signal, to implement communication between the communication apparatus and another apparatus. The processing unit may be configured to perform some internal operations of the communication apparatus. Functions performed by the processing unit and the interface unit may correspond to the operations in the second aspect or the fourth aspect.

In a possible design, the communication apparatus includes a processor, and the processor may be configured to be coupled to a memory. The memory may store a computer program or instructions necessary for implementing the functions in the second aspect or the fourth aspect. The processor may execute the computer program or the instructions stored in the memory. When the computer program or the instructions are executed, the communication apparatus is caused to implement the method in any possible design of the second aspect or the fourth aspect.

In a possible design, the communication apparatus includes a processor and a memory. The memory may store a computer program or instructions necessary for implementing the functions in the second aspect or the fourth aspect. The processor may execute the computer program or the instructions stored in the memory. When the computer program or the instructions are executed, the communication apparatus is caused to implement the method in any possible design of the second aspect or the fourth aspect.

In a possible design, the communication apparatus includes a processor and an interface circuit. The processor is configured to communicate with another apparatus through the interface circuit, and perform the method in any possible design of the second aspect or the fourth aspect.

It may be understood that, in the fifth aspect or the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated on a same chip, or may be separately disposed on different chips. A type of the memory and a manner of disposing the memory and the processor are not limited in embodiments of this application.

**According to a seventh aspect**, this application provides a communication system. The communication system may include the communication apparatus according to the fifth aspect and the communication apparatus according to the sixth aspect. For example, the communication system includes a terminal and an access network device. The terminal is configured to perform the communication method provided in the first aspect, and the access network device is configured to perform the communication method provided in the second aspect. Alternatively, the terminal is configured to perform the communication method provided in the third aspect, and the access network device is configured to perform the communication method provided in the fourth aspect.

**According to an eighth aspect**, this application provides a computer-readable storage medium. The computer storage medium stores a computer program or instructions. When the computer program or the instructions are executed, the method in any possible design of any one of the first aspect to the fourth aspect is implemented.

**According to a ninth aspect**, this application provides a computer program product. The computer program product includes computer program code. When the computer program code is run, the method in any possible design of any one of the first aspect to the fourth aspect is implemented.

**According to a tenth aspect**, this application provides a chip. The chip is configured to read a computer program stored in a memory, to perform the method in any possible design of any one of the first aspect to the fourth aspect.

For technical effects that can be achieved in any one of the second aspect and the fourth aspect to the tenth aspect, refer to the descriptions of the technical effects that can be achieved in any possible design of the first aspect or the third aspect. Repeated parts are not described.

### BRIEF DESCRIPTION OF DRAWINGS

FIG. 1A to FIG. 1D are diagrams of several architectures of a communication system to which embodiments of this application are applicable;
FIG. 2A and FIG. 2B are diagrams of several application scenarios according to embodiments of this application;
FIG. 3A to FIG. 3C are diagrams of several correspondences according to embodiments of this application;
FIG. 4 is a flowchart of a communication method according to an embodiment of this application;
FIG. 5A and FIG. 5B are diagrams of several other correspondences according to embodiments of this application;
FIG. 6 is a flowchart of a communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

A method provided in embodiments of this application may be applied to an NTN communication scenario. In the NTN communication scenario, non-terrestrial access network devices such as an uncrewed aerial vehicle, a high altitude platform station (high altitude platform station, HAPS), and a satellite may provide services such as data transmission and voice communication for a terminal. In addition, an NTN system may further include another non-terrestrial access network device. This is not limited in this application. The NTN communication scenario may further support various mobile communication systems, for example, a new radio (new radio, NR) system, a long term evolution (long term evolution, LTE) system, and a future communication system. This is not limited herein.

The method provided in embodiments of this application may be applied to at least one of the following: a 4th generation (4th generation, 4G) communication system (for example, the LTE system), a 5th generation (5th generation, 5G) communication system (for example, the NR system), or various future communication systems (for example, a 6th generation (6th generation, 6G) communication system). The communication method provided in embodiments of this application may be further applied to fields such as vehicle-to-everything (vehicle-to-everything, V2X) communication, the internet of vehicles, autonomous driving, and assisted driving.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

For ease of understanding, a communication system to which embodiments of this application may be applied is first described.

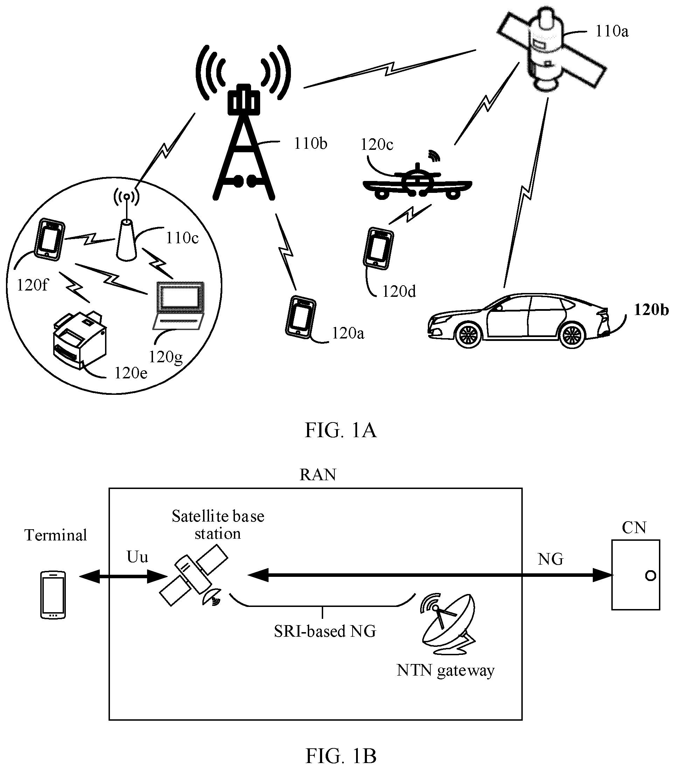

FIG. 1A is a diagram of a communication system to which an embodiment of this application may be applied. As shown in FIG. 1A, the communication system may include at least one access network device (for example, 110a, 110b, and 110c in FIG. 1A), and may further include at least one terminal (for example, 120a to 120g in FIG. 1A). The terminal may be mobile or fixed. Each access network device may provide communication coverage for a particular geographic area, and may communicate with a terminal located in the coverage area. A connection may be implemented between access network devices, between the access network device and the terminal, and between terminals in a wired or wireless manner. FIG. 1A is merely a diagram. The communication system may further include other devices, for example, may further include a wireless relay device and a wireless backhaul device.

Embodiments of this application are applicable to a communication system that integrates a terrestrial communication system and a satellite communication system, and the communication system may also be referred to as an NTN communication system.

The terrestrial communication system may be, for example, an LTE system, a 5G communication system, or various future communication systems (for example, a 6G communication system). This is not limited herein.

Compared with a conventional communication system, the satellite communication system has a wider coverage range, and can overcome natural geographical obstacles such as oceans, deserts, and mountains. To overcome shortcomings of the conventional communication system, the satellite communication system can be used as an effective supplement to the conventional communication system. Based on different orbital altitudes, satellite communication systems may be classified into the following three types: a geostationary earth orbit (geostationary earth orbit, GEO) satellite communication system, a medium earth orbit (medium earth orbit, MEO) satellite communication system, and a low earth orbit (low earth orbit, LEO) satellite communication system. The GEO satellite communication system may also be referred to as a synchronous orbit satellite system. It is generally considered that an NTN has different channel characteristics (for example, a high transmission latency and a large Doppler shift) compared with terrestrial communication. For example, a round-trip latency of the GEO satellite communication system is 238 milliseconds (ms) to 270 milliseconds, and a round-trip latency of the LEO satellite communication system is 8 ms to 20 ms.

Operating modes of a satellite can be classified into a transparent (transparent) mode and a regenerative (regenerative) mode. When the satellite operates in the transparent mode, the satellite has a relay and forwarding function. A gateway has all or part of functions of a base station. In this case, the gateway may be considered as a base station. When the satellite operates in the regenerative mode, the satellite has a data processing capability and has all or part of functions of a base station. In this case, the satellite may be considered as a base station.

FIG. 1B is a diagram of an NTN in a regenerative mode. As shown in FIG. 1B, a satellite has all or part of functions of a base station, and may be referred to as a satellite base station. The satellite base station may provide a wireless access service, and schedule a radio resource for a terminal that accesses a network through the satellite base station. The satellite base station may communicate with the terminal through a universal terrestrial radio access network-user (universal terrestrial radio access network-user, Uu) interface. The satellite base station and a core network (core network, CN) may communicate with each other through a next generation (next generation, NG) network interface, and the satellite base station and the core network may exchange non-access stratum (non-access stratum, NAS) signaling of the core network and service data of a user through the NG interface. A satellite radio interface (satellite radio interface, SRI) interface is a feeder link between an NTN gateway and the satellite. In FIG. 1B, the SRI interface may be used as part of the next generation (next generation, NG) network interface to implement communication interaction between the satellite base station and the core network.

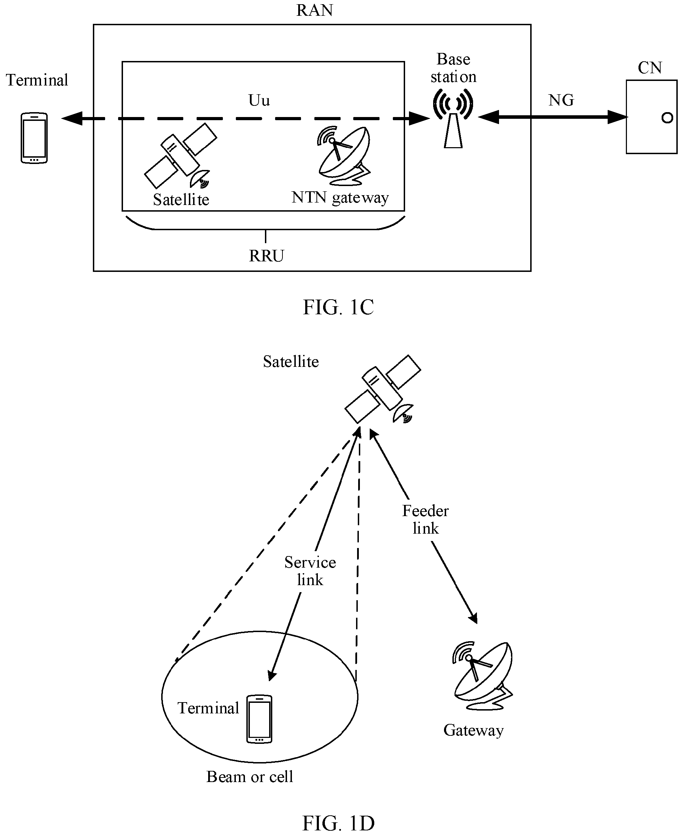

FIG. 1C is a diagram of an NTN in a transparent mode. As shown in FIG. 1C, a terminal communicates with a terrestrial base station through a Uu interface. A satellite may implement transparent payload transmission between the terminal and the terrestrial base station. The satellite and an NTN gateway may be considered as remote radio units (remote radio units, RRUs) of the terrestrial base station, to implement transparent signal forwarding, that is, the satellite supports radio frequency filtering, frequency conversion, amplification, and the like, and a signal waveform remains unchanged. Satellite forwarding is transparent to the terminal. The terrestrial base station and a CN may communicate with each other through an NG interface, and exchange NAS signaling of the core network and service data of the terminal through the NG interface.

FIG. 1D is a diagram of a satellite communication scenario. As shown in FIG. 1D, in the satellite communication scenario, an access network device includes a satellite and a gateway (gateway). A terminal includes an internet of things terminal, a mobile phone mobile terminal, a high-altitude airplane, and the like. The terminal may alternatively be a terminal in another form and with other performance, or the like. This is not limited herein. A link between the satellite and the terminal is referred to as a service link (service link), and a link between the satellite and the gateway is referred to as a feeder link (feeder link). The gateway may also be referred to as a gateway station. It should be noted that embodiments of this application may also be applied to a satellite communication scenario obtained through extension based on FIG. 1D.

In this application, the terminal (terminal) may also be referred to as user equipment (user equipment, UE), an access terminal, a subscriber unit (subscriber unit), a subscriber station, a mobile station (mobile station, MS), a remote station, a remote terminal, a mobile device, a user terminal, terminal equipment (terminal equipment), a wireless communication device, a user agent, or a user apparatus.

The terminal may be a device that has a wireless communication function, for example, a handheld device or a vehicle-mounted device that has a wireless connection function. Currently, some examples of the terminal are: a mobile phone (mobile phone), a satellite mobile terminal, a cellular phone (cellular phone), a smartphone (smartphone), a tablet computer, a notebook computer, a palmtop computer, a mobile internet device (mobile internet device, MID), a wearable device (for example, a smartwatch, a smart band, a pedometer, or smart glasses), a vehicle-mounted device (for example, a motor vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal (for example, a refrigerator, a television, an air conditioner, or an electricity meter) in a smart home (smart home), a smart robot, a robot arm, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a flight device (for example, an intelligent robot, a hot air balloon, an uncrewed aerial vehicle, or an airplane), a terminal in a 5G network, a terminal in a future evolved public land mobile network (public land mobile network, PLMN), and the like. This is not limited in embodiments of this application. By way of example but not limitation, in embodiments of this application, the terminal may alternatively be a mobile termination (mobile termination, MT) in an integrated access and backhaul (integrated access and backhaul, IAB) node. With respect to a parent node of the IAB node, the IAB node may be considered as a terminal. In this case, the IAB node plays a role of an MT.

A device form of the terminal is not limited in embodiments of this application. An apparatus configured to implement a function of the terminal may be a terminal, or may be an apparatus that can support the terminal in implementing the function, for example, a chip system. The apparatus may be installed in the terminal or used together with the terminal. In embodiments of this application, the chip system may include a chip, or may include a chip and another discrete device.

In this application, the access network device is a device that provides a wireless communication function for the terminal, and the terminal may communicate with a core network device via the access network device. As a node in a radio access network, the access network device may also be referred to as a base station, a radio access network (radio access network, RAN) node (or device), or an access point (access point, AP). The communication system may include a plurality of access network devices. The plurality of access network devices may be nodes of a same type, or may be nodes of different types. In some scenarios, roles of the access network device and the terminal are relative. For example, a network element #A may be a helicopter or an uncrewed aerial vehicle, may be configured as a mobile base station, and may access the RAN via a network element #B. For terminals that access the RAN via the network element #A, the network element #A is a base station. However, for the network element #B, the network element #A is a terminal.

In a possible scenario, the access network device may be a base station (base station), a transmitting and receiving point (transmitting and receiving point, TRP), a transmitting point (transmitting point, TP), a next generation base station in a 6G mobile communication system, a base station in a future mobile communication system, a satellite, an IAB node, a mobile switching center, a high altitude platform station, a satellite, or the like. The access network device may be a macro base station, a micro base station, an indoor base station, a relay node, a donor node, or a radio controller in a cloud RAN (cloud RAN, CRAN) scenario. Alternatively, the access network device may be a device that functions as a base station in device-to-device (device-to-device, D2D) communication, internet of vehicles communication, uncrewed aerial vehicle communication, or machine to machine communication. Optionally, the access network device may alternatively be a server, a wearable device, a vehicle, a vehicle-mounted device, or the like. For example, an access network device in a V2X technology may be a roadside unit (roadside unit, RSU).

In another possible scenario, a plurality of access network devices coordinate to assist the terminal in implementing radio access, and different access network devices separately implement part of functions of a base station. For example, the access network device may be a central unit (central unit, CU), a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may also have different names, but a person skilled in the art may understand meanings thereof. For example, in an Open RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus that can support the access network device in implementing the function, for example, a chip system. The apparatus may be installed in the access network device or used together with the access network device.

The access network device and the terminal may be at fixed positions, or may be movable. The access network device and the terminal may be deployed on land, including an indoor device, an outdoor device, a handheld device, or a vehicle-mounted device; may be deployed on water; or may be deployed on an airplane, a balloon, and an artificial satellite in the air. Application scenarios of the access network device and the terminal are not limited in embodiments of this application.

The communication system and the service scenario described in embodiments of this application are intended to describe the technical solutions in embodiments of this application more clearly, and do not constitute a limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

The following first explains and describes related terms in embodiments of this application. It should be noted that these explanations are intended to make embodiments of this application easier to understand, but should not be considered as a limitation on the protection scope claimed in this application.

### (1) Mobility management

Due to movement of a terminal, the terminal performs access selection and handover between different cells, and the selection and handover generally depend on the mobility management. The mobility management mainly refers to a measurement procedure related to radio resource management (radio resource management, RRM) and a mobility signaling procedure triggered based on a measurement result.

In the mobility management, an access network device delivers measurement configuration information to the terminal, so that the terminal can measure a reference signal based on the measurement configuration information, to obtain the measurement result. The measurement result may include at least one of the following: reference signal received power (reference signal received power, RSRP), reference signal received quality (reference signal received quality, RSRQ), or signal to interference plus noise ratio (signal to interference plus noise ratio, SINR).

There may be two types of reference signals used for the mobility management, for example, an SSB and a channel state information-reference signal (channel state information-reference signal, CSI-RS). In embodiments of this application, SSB-based mobility management is mainly studied.

### (2) SSB

A synchronization signal block (synchronization signal block, SS) and a master information block (main information block, MIB) on a PBCH are generally sent together, to form an SS/PBCH block. An SSB described below in embodiments of this application may be an SS/PBCH block (SS/PBCH block). A synchronization signal may be used by the terminal to perform downlink synchronization and obtain an identity (identity, ID) of a cell. The downlink synchronization may include frequency synchronization and time synchronization. The PBCH may be used by the terminal to obtain information about a cell to be accessed.

### (3) Relationship between the SSB and a beam

The access network device may use a plurality of antennas to enhance coverage. However, when the plurality of antennas are used, antenna radiation is an extremely narrow beam, and it is difficult for a single narrow beam to cover an entire cell. In addition, due to a hardware limitation, the access network device usually cannot simultaneously send signals over a plurality of beams to cover the entire cell. Therefore, a beam sweeping technology is introduced into a communication system, that is, the access network device may send signals over different beams at different moments. For example, for a cell, the access network device may send different SSBs over different beams at different moments, to complete broadcast beam coverage of the cell. Each beam may be indicated by using an SSB. For example, each beam may be indicated by using an index of an SSB sent on the beam.

### (4) SSB-based measurement timing configuration (SSB-based measurement timing configuration, SMTC)

Usually, SSBs are not consecutive in the time domain. The terminal does not need to continuously search for and measure the SSBs in the time domain, but performs an operation in a time window in which these SSBs can be locked. Therefore, the SMTC is introduced into an NR protocol, and the SMTC may be used to configure a measurement time window. The access network device may configure a corresponding SMTC for each to-be-measured frequency, so that the terminal can perform SSB measurement in a measurement time window configured by using the SMTC of the frequency. During RRM measurement, if center frequencies of SSBs of two cells are the same and subcarrier spacings are also the same, measurement between the two cells is referred to as intra-frequency measurement; otherwise, measurement between the two cells is referred to as inter-frequency measurement. For an intra-frequency measurement scenario, the terminal may obtain SSBs of a plurality of cells through measurement in a measurement time window configured by using an SMTC of one frequency.

### (5) Correspondence between a plurality of areas and a plurality of SSBs in a coverage range of the access network device (for example, a satellite)

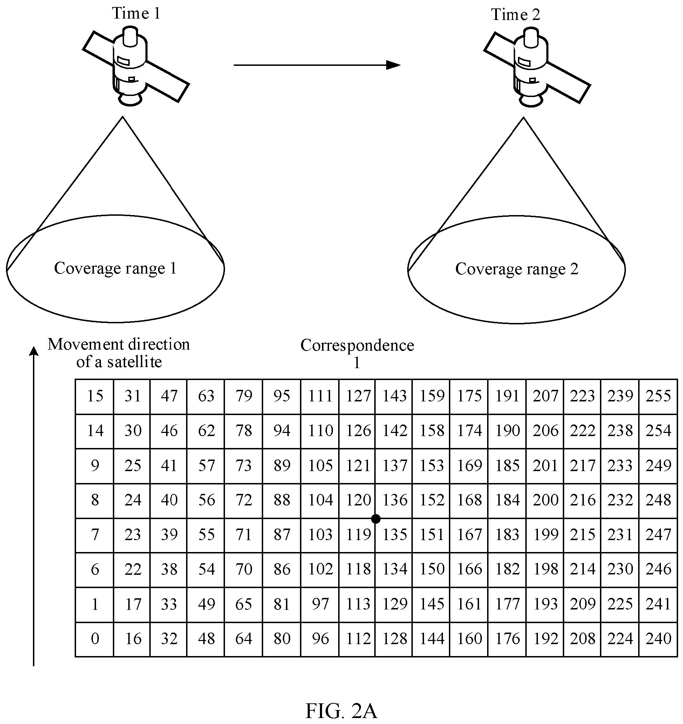

In some possible manners, the correspondence between the plurality of areas and the plurality of SSBs in the coverage range of the access network device may remain unchanged. In other words, at different time, correspondences between a plurality of areas and a plurality of SSBs in coverage ranges of the access network device are the same. For example, as shown in FIG. 2A, at time 1, the satellite is located at a position 1, a coverage range of the satellite is a coverage range 1, and a correspondence between a plurality of areas and a plurality of SSBs in the coverage range 1 is a correspondence 1. At time 2, the satellite moves to a position 2, a coverage range of the satellite is a coverage range 2, and a correspondence between a plurality of areas and a plurality of SSBs in the coverage range 2 is still the correspondence 1. In this manner, as the access network device moves, a beam weight and a beam direction on an access network device side remain unchanged. Therefore, this manner may also be referred to as a manner in which a beam moves with the access network device.

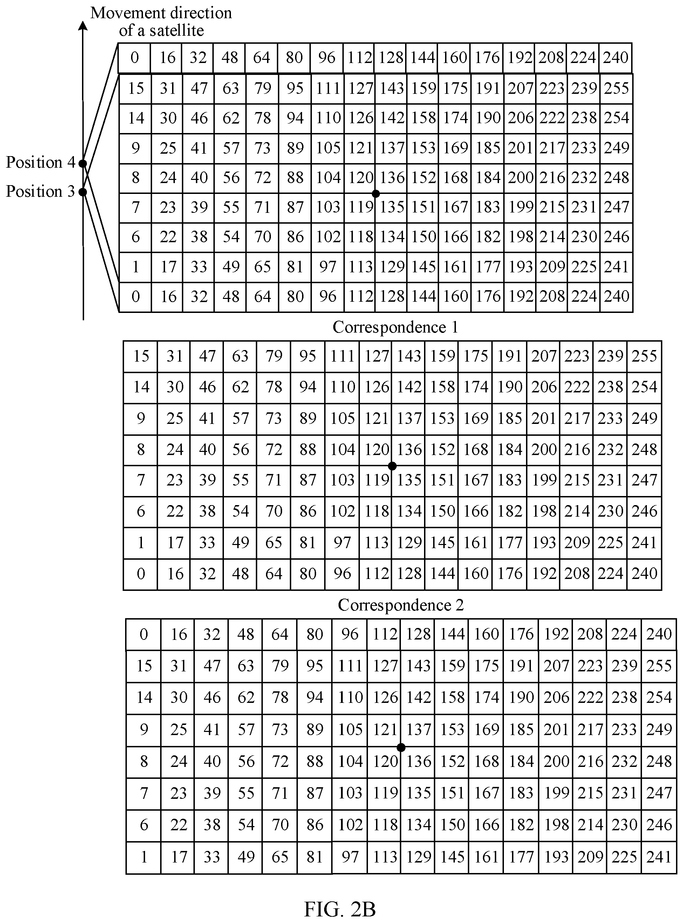

In some other possible manners, the correspondence between the plurality of areas and the plurality of SSBs in the coverage range of the access network device is variable. In other words, at different time, correspondences between a plurality of areas and a plurality of SSBs in coverage ranges of the access network device may be different. Optionally, in a period of time, even if a position of the access network device changes, SSBs corresponding to a same area as the ground are the same in coverage ranges of the access network device. For example, as shown in FIG. 2B, at time 3, the satellite is located at a position 3, a coverage range of the satellite is a coverage range 3, and a correspondence between a plurality of areas and a plurality of SSBs in the coverage range 3 is a correspondence 1. At time 4, the satellite is located at a position 4, a coverage range of the satellite is a coverage range 4, and a correspondence between a plurality of areas and a plurality of SSBs in the coverage range 4 is a correspondence 2. The correspondence 1 and the correspondence 2 are different. In both the correspondence 1 and the correspondence 2, a terrestrial area 1 corresponds to an SSB 1. In this manner, as the access network device moves, the SSBs corresponding to the same area as the ground are the same. Therefore, this manner may also be referred to as a manner of a fixed area on the ground.

### (6) Area

In this application, the area may be a geographical area, a geographical range, an administrative area, an administrative range, a beam position, or the like. The beam position may be a coverage range of a beam (or a projection range of the beam on the ground). The access network device may adjust a weight of the antenna, so that beams sent by the access network device can point to different directions and have different coverage ranges. For example, 16 beams are configured for one satellite, coverage ranges of the beams are different, and a coverage range of each beam may be one beam position.

### (7) Area in which no SSB is sent

In the coverage range of the access network device, some areas may be areas in which no SSB is sent. For example, no SSB is sent in an area that overlaps an electric fence in the coverage range of the access network device. In other words, the access network device does not send an SSB in the area that overlaps the electric fence in the coverage range of the access network device. The electric fence may be a specified area, and the access network device does not send an SSB in the area. For example, the electric fence may be located in a rural-urban fringe. To avoid interference to urban communication, the access network device may not send an SSB at the rural-urban fringe.

(8) In this application, "sending information to ... (terminal)" may be understood as that a destination end of the information is the terminal, and may include directly or indirectly sending the information to the terminal. "Receiving information from ... (terminal)" may be understood as that a source end of the information is the terminal, and may include directly or indirectly receiving the information from the terminal. Necessary processing, for example, a format change, may be performed on the information when the information is sent between the source end and the destination end, but the destination end can understand valid information from the source end. A similar expression in this application may be understood similarly, and details are not described herein again.

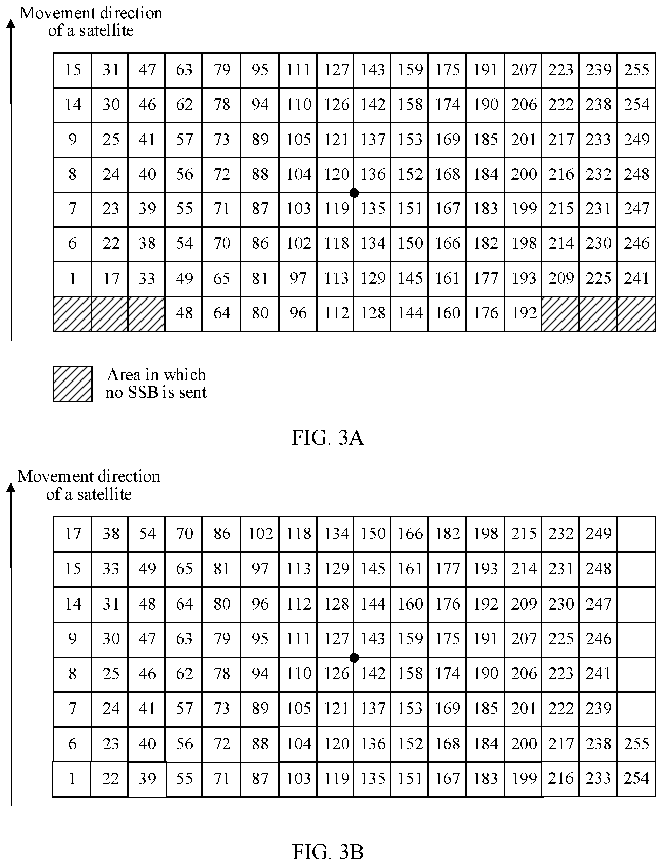

Currently, the access network device may indicate, to the terminal by using an SSB bitmap, an SSB sent by the access network device, and the terminal determines, based on this, a correspondence between an area and an SSB in a communication system like an NTN. In the SSB bitmap, a value of a bit corresponding to the SSB sent by the access network device is 1, and a value of a bit corresponding to an SSB not sent by the access network device is 0. However, as described above, in the coverage range of the access network device, some areas may be areas in which no SSB is sent. For example, some areas may be areas that overlap the electric fence, or some areas may be electric fence areas. In this case, the access network device does not send an SSB corresponding to the area that overlaps the electric fence. As a result, the terminal and the access network device have different understandings of a correspondence between each area and an SSB in the coverage range of the access network device. For example, if the correspondence between each area and the SSB in the coverage range of the access network device is shown in FIG. 3A, the access network device indicates, to the terminal by using the SSB bitmap, that indexes of SSBs sent by the access network device may be {1, 6, 7, 8, 9, 14, 15, 17, ..., 239, 241, 246, 247, 248, 249, 254, 255}. Based on this, the terminal determines that the correspondence between each area and the SSB in the coverage range of the access network device may be shown in FIG. 3B. Correspondences shown in FIG. 3A and FIG. 3B are different. Therefore, how to determine the correspondence between the area and the SSB in the communication system like the NTN needs to be further studied.

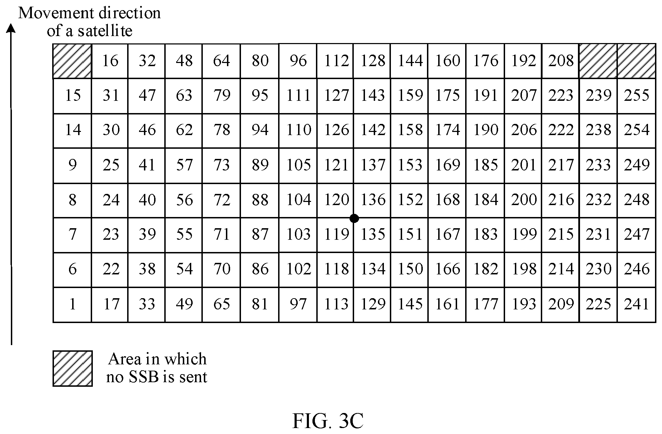

In addition, in the method, the access network device (for example, the satellite) may indicate, to the terminal by using the SSB bitmap, the SSB sent by the access network device. However, the coverage range of the access network device changes at intervals of a period of time. In this case, the area that overlaps the electric fence in the coverage range of the access network device also changes, and consequently, the SSB bitmap changes. For example, in a time period 1, a correspondence between each area and an SSB in a coverage range of the access network device is shown in FIG. 3A, and an SSB bitmap corresponds to FIG. 3A. In a time period 2, a correspondence between each area and an SSB in a coverage range of the access network device is shown in FIG. 3C, and an SSB bitmap corresponds to FIG. 3C. In this case, the access network device needs to send an updated SSB bitmap to the terminal at intervals of a period of time. Consequently, signaling overheads are high, and power consumption of receiving the SSB by the terminal is also high. Therefore, for the communication system like the NTN, how to reduce the signaling overheads and reduce the power consumption of the terminal also needs to be further studied.

It should be understood that this application is not limited to an NTN scenario, the NTN is only one of application scenarios, and another scenario (for example, in future 6G evolution) is still applicable.

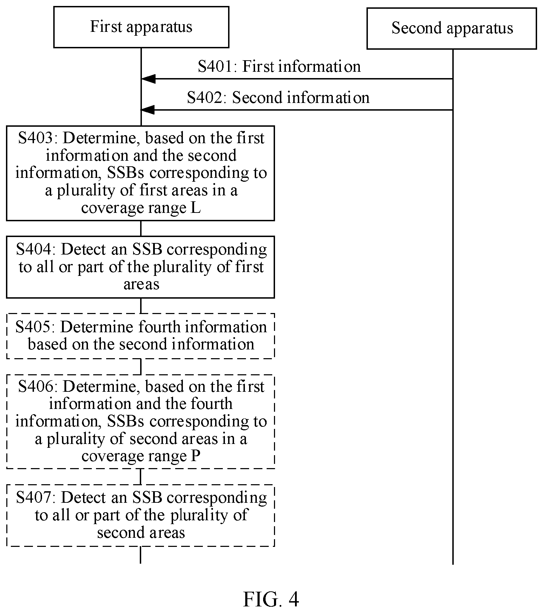

Embodiments of this application provide a communication method. FIG. 4 is a schematic flowchart corresponding to a communication method according to an embodiment of this application. In FIG. 4, the method is illustrated by using an example in which a first apparatus and a second apparatus are used as execution entities of interaction illustration. However, the execution entities of the interaction illustration are not limited in this application. For example, the first apparatus may be a terminal, or may be a module used in the terminal, for example, a circuit, a chip, a chip system, or a processor, or may be a logical node, a logical module, or software that can implement all or part of functions of the terminal; and the second apparatus may be an access network device (for example, a satellite), or may be a module used in the access network device (for example, the satellite), for example, a circuit, a chip, a chip system, or a processor, or may be a logical node, a logical module, or software that can implement all or part of functions of the access network device (for example, the satellite). As shown in FIG. 4, the method includes the following steps.

**S401**: The second apparatus may send first information to the first apparatus, and correspondingly, the first apparatus may receive the first information from the second apparatus.

The first information may indicate A SSBs. A may be a quantity of areas in a coverage range L of the second apparatus, and A may be an integer greater than or equal to 2. For example, if the coverage range L of the second apparatus is shown in FIG. 3A, A may be 8*16=128. Optionally, there may be a first correspondence between the A SSBs and A first areas in the coverage range L. In this way, the first apparatus may detect (or measure or receive) an SSB based on the first correspondence. It should be understood that the coverage range of the second apparatus may change with time, or may not change with time. When the coverage range of the second apparatus changes with time, the coverage range L may be a coverage range of the second apparatus in a first time period. In this case, A may be a quantity of areas in the coverage range of the second apparatus in the first time period.

Optionally, the first information may indicate a plurality of bits corresponding to a plurality of SSBs, the plurality of SSBs may include the A SSBs, and bit statuses of A bits in the plurality of bits may indicate the A SSBs. The plurality of SSBs may be in a plurality of forms, for example, may be all SSBs that can be sent by the second apparatus, or may be the A SSBs. This is not limited in this application. For example, a first bit is any one of the plurality of bits. If a value of the first bit is a value #1 (for example, 1), it indicates that an SSB corresponding to the first bit belongs to the A SSBs. If a value of the first bit is a value #2 (for example, 0), it indicates that an SSB corresponding to the first bit does not belong to the A SSBs. For example, if a correspondence between each area and an SSB in the coverage range L is shown in FIG. 3A, and the value #1 is 1, the plurality of bits indicated by the first information may be {1100001111000011...1100001111000011}, indicating that indexes of the A SSBs may be {0, 1, 6, 7, 8, 9, 14, 15, ..., 240, 241, 246, 247, 248, 249, 254, 255}. In this manner, the first information may accurately indicate the A SSBs.

In some implementations, the first information may be conventional information. For example, the first information is an SSB bitmap, and the SSB bitmap may be included in an ssb-PositionInBurst parameter. In other words, the first information may be included in the ssb-PositionInBurst parameter. The ssb-PositionInBurst parameter may be an ssb-PositionInBurst parameter in clause 6.3.2 of the 3rd generation partnership project (3rd generation partnership project, 3GPP) standard 38.331.

In some other implementations, the first information may be new information. For example, the first information may be included in a new parameter, and a name of the new parameter is, for example, an ssb-AllCoverageMap parameter, or the new parameter has another name. This is not limited in this application.

Optionally, the first information may be carried in broadcast information sent by the second apparatus. The broadcast information is, for example, radio resource control (radio resource control, RRC) signaling such as system information. The system information may be a conventional system information block, for example, a system information block 1 (system information block 1, SIB1), a system information block 19 (system information block 19, SIB19), or other system information (other system information, OSI); or the system information may be a new system information block, for example, a system information block 1bis (system information block 1bis, SIB1bis). It should be understood that the SIB1bis may also have another name, for example, a system information block 1' (system information block 1', SIB1').

**S402**: The second apparatus sends second information to the first apparatus, and correspondingly, the first apparatus receives the second information from the second apparatus.

The second information may indicate B SSBs that are not transmitted among the A SSBs in the coverage range L, and B is a positive integer. In other words, the second information may indicate the B SSBs, in the A SSBs, that correspond to areas (for example, electric fences) in which no SSB can be transmitted in the coverage range L. For example, if the correspondence between each area and the SSB in the coverage range L is shown in FIG. 3A, indexes of the B SSBs may be {0, 16, 32, 208, 224, 240}.

Optionally, the second information may indicate at least one bit corresponding to at least one SSB, the at least one SSB may include the B SSBs, and bit statuses of B bits in the at least one bit may indicate the B SSBs. The at least one SSB may be in a plurality of forms, for example, may be the plurality of SSBs in S401, or may be the A SSBs. This is not limited in this application. For example, a second bit is any one of the at least one bit. If a value of the second bit is a value #3 (for example, 1), it indicates that an SSB corresponding to the second bit belongs to the B SSBs. If a value of the second bit is a value #4 (for example, 0), it indicates that an SSB corresponding to the second bit does not belong to the B SSBs. For example, if the correspondence between each area and the SSB in the coverage range L is shown in FIG. 3A, the value #3 is 1, and the second information indicates the A bits corresponding to the A SSBs, the A bits indicated by the second information may be {10000000100000001...100000001000000010000000}, indicating that the indexes of the B SSBs may be {0, 16, 32, 208, 224, 240}. In this manner, the second information may accurately indicate the B SSBs.

The second information may indicate the at least one bit corresponding to the at least one SSB in a plurality of manners, for example, Manner a1, Manner a2, and Manner a3.

**Manner a1**: The second information includes the at least one bit corresponding to the at least one SSB. For specific content of the at least one bit, refer to the foregoing descriptions of the at least one bit corresponding to the at least one SSB. Details are not described herein again. In this manner, the first apparatus may accurately obtain, based on the second information, the at least one bit corresponding to the at least one SSB.

### Manner a2:

When a correspondence between the A areas and the A SSBs in the coverage range of the second apparatus is variable, the method shown in FIG. 4 further includes step A1.

**Step A1**: The second apparatus may send third information to the first apparatus, and correspondingly, the first apparatus may receive the third information from the second apparatus.

The third information may indicate a correspondence between M groups of bits and M pieces of indication information. M may be a quantity of areas in the coverage range L along a first direction, and the first direction may be a movement direction of the second apparatus. For example, if the coverage range L of the second apparatus is shown in FIG. 3A, M=8.

The following first describes the M pieces of indication information. An i^{th} piece of indication information in the M pieces of indication information may indicate a correspondence (referred to as an i^{th} correspondence below) between A areas i and the A SSBs. The A areas i may be A areas in a coverage range of the second apparatus in a time period i, and a value of i may be any integer from 1 to M. It should be understood that this manner is applicable to a case in which the coverage range of the second apparatus changes with time, and in a time period 1 to a time period M, quantities of areas in coverage ranges of the second apparatus may all be A.

Optionally, the i^{th} piece of indication information in the M pieces of indication information may indicate an association relationship between the i^{th} correspondence and an initial correspondence. In this way, the first apparatus may determine the i^{th} correspondence based on the i^{th} piece of indication information and the initial correspondence. The i^{th} correspondence may be represented by using a pattern or a matrix. For example, the i^{th} correspondence may include M rows and N columns. N may be a quantity of areas in the coverage range L along a second direction, and N is a positive integer. The second direction may be different from the first direction. For example, the second direction may be perpendicular to the first direction. A first element is any element in the i^{th} correspondence, the first element represents an area a in the plurality of areas in the coverage range of the second apparatus, a value of the first element is an index of a first SSB in the A SSBs, and the area a corresponds to the first SSB. Last (or bottommost) (i-1) rows in the initial correspondence may be first (or topmost) (i-1) rows in the i^{th} correspondence, and first (or topmost) (M-i+1) rows in the initial correspondence may be last (or bottommost) (M-i+1) rows in the i^{th} correspondence.

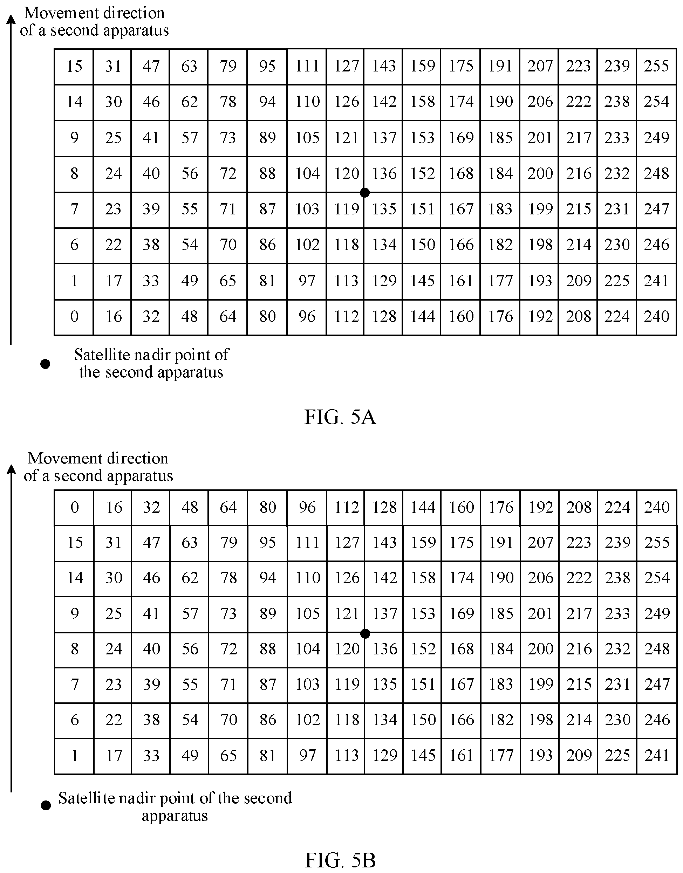

For example, the initial correspondence is a correspondence shown in FIG. 5A, the i^{th} correspondence is a correspondence shown in FIG. 5B, and i is 2. One (that is, i-1=2-1=1) last (or bottommost) row in the initial correspondence is a first (or topmost) one row in the i^{th} correspondence, and first (or topmost) seven (that is, M-i+1=8-2+1=7) rows in the initial correspondence are last (or bottommost) seven rows in the i^{th} correspondence.

For another example, both the initial correspondence and the i^{th} correspondence are the correspondence shown in FIG. 5A, and i is 1. A 1^{st} row in the initial correspondence is a 1^{st} row in the i^{th} correspondence, a 2^{nd} row in the initial correspondence is a 2^{nd} row in the i^{th} correspondence, and so on.

An i^{th} group of bits in the M groups of bits may indicate an SSB that is not transmitted among the A SSBs in a coverage range i, and the coverage range i is the coverage range of the second apparatus in the time period i. For example, a fourth bit is any bit in the i^{th} group of bits. If a value of the fourth bit is a value #3 (for example, 1), it indicates that an SSB corresponding to the fourth bit is an SSB that is not transmitted among the A SSBs in the coverage range i. If a value of the fourth bit is a value #4 (for example, 0), it indicates that an SSB corresponding to the fourth bit is not an SSB that is not transmitted among the A SSBs in the coverage range i.

As described above, the third information may indicate the correspondence between the M groups of bits and the M pieces of indication information. In some examples, the third information may explicitly indicate the correspondence between the M groups of bits and the M pieces of indication information. For example, the third information may include the correspondence between the M groups of bits and the M pieces of indication information. In some other examples, the third information may implicitly indicate the correspondence between the M groups of bits and the M pieces of indication information. For example, the third information may include information corresponding to the correspondence between the M groups of bits and the M pieces of indication information.

Optionally, the third information may be carried in broadcast information sent by the second apparatus, and the broadcast information is, for example, system information or RRC signaling. The system information may be a conventional system information block, for example, a SIB1, a SIB19, or OSI; or the system information may be a new system information block, for example, a SIB1bis.

It should be understood that a sequence of step A1 and S401 and S402 is not limited in this application. The third information and the first information and/or the second information may be carried in a same message, or may be carried in different messages. This is not limited in this application.

In Manner a2, the second information may be one of the M pieces of indication information, and the at least one bit may be one group of bits in the M groups of bits that corresponds to the second information. For example, M=8, and the correspondence between the M groups of bits and the M pieces of indication information is shown in Table 1. If a value of the second information is 0, the at least one bit may be 100010...00001.

**Table 1**

| Index | M pieces of indication information | M groups of bits |
|---|---|---|
| 0 | 0 | 100010...00001 |
| 1 | 1 | 000010...00001 |
| 2 | 2 | 000011...10001 |
| 3 | 3 | 000011...00001 |
| 4 | 4 | 000011...10001 |
| 5 | 5 | 000001...00001 |
| 6 | 6 | 000001...10101 |
| 7 | 7 | 000001...10001 |

It should be understood that Table 1 is merely an example. In actual application, the M groups of bits may alternatively be other values. This is not limited in this application.

In Manner a2, the second information may be one of the M pieces of indication information, to indicate the correspondence between the A areas i and the A SSBs, and may also implicitly indicate the at least one bit, thereby reducing signaling overheads.

**Manner a3**: When a correspondence between the A areas and the A SSBs in the coverage range of the second apparatus remains unchanged, the second information may indicate M groups of bits. For specific content of M, refer to the descriptions of M in Manner a2. For specific content of the M groups of bits, refer to the descriptions of the M groups of bits in Manner a2. Details are not described herein again. The M groups of bits may correspond to M time periods in chronological order. The at least one bit may be one group of bits in the M groups of bits that corresponds to an earliest time period in the M time periods. Optionally, the M time periods may be continuous, and coverage ranges of the second apparatus may be different in different time periods of the M time periods.

For example, M=8, and the M groups of bits may be shown in Table 2. The eight groups of bits may correspond to eight time periods in chronological order. For example, one group of bits corresponding to an index 0 corresponds to a time period #1, and the time period #1 is from t0 to t0+Δt; one group of bits corresponding to an index 1 corresponds to a time period #2, and the time period #2 is from t0+Δt to t0+2*Δt; one group of bits corresponding to an index 2 corresponds to a time period #3, and the time period #3 is from t0+2*Δt to t0+3*Δt; and so on. The at least one bit may be the one group of bits in the M groups of bits that corresponds to the time period #1.

Optionally, the second information may further include first indication information in Table 2. The first indication information may indicate an association relationship between a second correspondence and an initial correspondence. The second correspondence may be a correspondence between the A areas and the A SSBs in the coverage range of the second apparatus. For the association relationship between the second correspondence and the initial correspondence, refer to the descriptions of the association relationship between the i^{th} correspondence and the initial correspondence in Manner a2, provided that the i^{th} correspondence is replaced with the second correspondence. Details are not described herein again.

**Table 2**

| Index | First indication information | M groups of bits |
|---|---|---|
| 0 | -1 | 100010...00001 |
| 1 | -1 | 000010...00001 |
| 2 | -1 | 000011...10001 |
| 3 | -1 | 000011...00001 |
| 4 | -1 | 000011...10001 |
| 5 | -1 | 000001...00001 |
| 6 | -1 | 000001...10101 |
| 7 | -1 | 000001...10001 |

It should be understood that Table 2 is merely an example. In actual application, the M groups of bits may alternatively be other values, and the first indication information may alternatively be another value. This is not limited in this application.

In Manner a3, the first apparatus may quickly and accurately determine the at least one bit based on the second information.

Optionally, the second information may be carried in broadcast information sent by the second apparatus, and the broadcast information is, for example, system information or RRC signaling. The system information may be a conventional system information block, for example, a SIB1, a SIB19, or OSI; or the system information may be a new system information block, for example, a SIB1bis.

A sequence of S401 and S402 is not limited in this application. The first information and the second information may be carried in a same message, or may be carried in different messages. This is not limited in this application.

**S403**: The first apparatus determines, based on the first information and the second information, SSBs corresponding to a plurality of first areas in the coverage range L. In other words, the first information and the second information may be used to determine the SSBs corresponding to the plurality of first areas in the coverage range L.

For example, if the correspondence between each area and the SSB in the coverage range L is shown in FIG. 3A, the first apparatus may determine, based on the first information, that the indexes of the A SSBs may be {0, 1, 6, 7, 8, 9, 14, 15, ..., 240, 241, 246, 247, 248, 249, 254, 255}, and determine, based on the second information, that the indexes of the B SSBs may be {0, 16, 32, 208, 224, 240}. Then, the first apparatus may determine that indexes of the SSBs (which may be referred to as C SSBs below, where C is a positive integer) corresponding to the plurality of first areas in the coverage range L are {1, 6, 7, 8, 9, 14, 15, ..., 241, 246, 247, 248, 249, 254, 255}.

Optionally, the first apparatus may determine a correspondence between the plurality of first areas and the C SSBs in the coverage range L based on the first information and the second information. The following describes, by using step B1 and step B2, an example of a manner in which the first apparatus may determine the correspondence between the plurality of first areas and the C SSBs in the coverage range L based on the first information and the second information.

**Step B1**: The first apparatus may determine the first correspondence based on the first information.

The first correspondence may be a correspondence between the A SSBs and the A first areas in the coverage range L. For specific content of the first correspondence, refer to the descriptions of the i^{th} correspondence in Manner a2. Details are not described herein again. For example, if the correspondence between each area and the SSB in the coverage range L is shown in FIG. 3A, the first correspondence may be shown in FIG. 5A.

For example, after receiving information #a from the second apparatus, the first apparatus may determine the first correspondence based on the first information and the information #a. The information #a may indicate at least one of the following information 1 to information 7:

Information 1: Quantity of first areas in the coverage range L in a third direction. The third direction may be the same as or different from the first direction. When the third direction is the same as the first direction, the information 1 may be M. FIG. 5A is still used as an example. If the third direction is the first direction, that is, the movement direction of the second apparatus, the information 1 may be 8.

Information 2: Radius, Diameter, or edge length of each area in the coverage range L along the third direction. For example, if a shape of each area in the coverage range L is a circle or an ellipse, the information 2 may be the radius or the diameter of each area in the coverage range L along the third direction. For another example, if a shape of each area in the coverage range L is a rectangle or a square, the information 2 may be the edge length of each area in the coverage range L along the third direction.

Optionally, shapes and sizes of the areas in the coverage range L may be the same or different. If the shapes and the sizes of the areas in the coverage range L are all the same, the information #a may indicate only a radius, a diameter, or an edge length of one area in the coverage range L along the third direction, thereby reducing signaling overheads of the information #a. For example, the information #a may indicate that the radius of each area in the coverage range L along the third direction is 40 kilometers (km). If the shapes and the sizes of the areas in the coverage range L are different, the information #a may indicate the radius, the diameter, or the edge length of each area in the coverage range L along the third direction.

Information 3: Quantity of first areas in the coverage range L along a fourth direction. The fourth direction may be different from the third direction. For example, the third direction is perpendicular to the fourth direction. When the fourth direction is the same as the second direction, the information 3 may be N. FIG. 5A is still used as an example. If the third direction is the movement direction of the second apparatus, and the third direction is perpendicular to the fourth direction, the information 3 is 16.

Information 4: Radius, Diameter, or edge length of each area in the coverage range L along the fourth direction. For example, if a shape of each area in the coverage range L is a circle or an ellipse, the information 4 may be the radius or the diameter of each area in the coverage range L along the fourth direction. For another example, if a shape of each area in the coverage range L is a rectangle or a square, the information 4 may be the edge length of each area in the coverage range L along the fourth direction.

Optionally, shapes and sizes of the areas in the coverage range L may be the same or different. If the shapes and the sizes of the areas in the coverage range L are all the same, the information #a may indicate only a radius, a diameter, or an edge length of one area in the coverage range L along the fourth direction, thereby reducing signaling overheads of the information #a. For example, the information #a may indicate that the radius of each area in the coverage range L along the fourth direction is 30 km. If the shapes and the sizes of the areas in the coverage range L are different, the information #a may indicate the radius, the diameter, or the edge length of each area in the coverage range L along the fourth direction.

Optionally, if a shape of each area in the coverage range L is a circle or a square, the information #a may indicate one piece of the information 1 and the information 3, and indicate one piece of the information 2 and the information 4.

Information 5: Position of a reference area in the coverage range L. The reference area may be a first area in the coverage range L. In some examples, the reference area is a central area of the coverage range L. In some other examples, the reference area is a start area of the coverage range L. For example, FIG. 5A is still used as an example. The reference area may be an area corresponding to 0. In still some other examples, the reference area is an area corresponding to a start SSB in the coverage range L. The start SSB may be an SSB with a largest or smallest index in the plurality of SSBs. For example, FIG. 5A is still used as an example. If the start SSB may be an SSB with a smallest index in the plurality of SSBs, the reference area may be an area corresponding to an SSB index 0. If the start SSB may be an SSB with a largest index in the plurality of SSBs, the reference area may be an area corresponding to an SSB index 255.

In some implementations, the information #a may explicitly indicate a geographical position (for example, coordinates or longitude and latitude of the reference area) of the reference area. In this way, after receiving the information #a, the first apparatus may determine the position of the reference area. In some other implementations, the information #a may indicate a relationship between the reference area and a reference position (for example, a satellite nadir point of the second apparatus). In this way, the first apparatus may determine a geographical position of the reference area based on the information #a and the reference position. For example, FIG. 5A is still used as an example. The reference area may be the area corresponding to 0, the reference position is the satellite nadir point of the second apparatus, and the information #a indicates that the reference position, relative to the satellite nadir point of the second apparatus, is offset by four first areas in a reverse direction of the third direction, and is offset by eight first areas in a reverse direction of the fourth direction.

Information 6: Arrangement order of the A SSBs in the initial correspondence between the A areas and the A SSBs in the coverage range of the second apparatus. In some examples, the arrangement order is set along the fourth direction. For example, the fourth direction is perpendicular to the movement direction of the second apparatus (in other words, the fourth direction is perpendicular to an orbit direction of the second apparatus), and the arrangement order is set perpendicular to an orbit. In some other examples, the arrangement order is set along the third direction. For example, the third direction is the movement direction of the second apparatus (or an orbit direction of the second apparatus), and the arrangement order is set horizontal to an orbit. It is assumed that the initial correspondence is shown in FIG. 5A. If the third direction is the movement direction of the second apparatus, the indexes of the A SSBs gradually increase along the third direction.

Information 7: Association relationship between the first correspondence and the initial correspondence. If the first correspondence is the i^{th} correspondence, the information 7 may be related to i. For example, the information 7 is i, or the information 7 is a sum of i and an offset value 1, and the offset value 1 may be a positive number or a negative number. The offset value 1 may be preset, for example, specified in a protocol, or may be determined by the first apparatus or the second apparatus. For specific content of the association relationship between the first correspondence and the initial correspondence, refer to the descriptions of the association relationship between the i^{th} correspondence and the initial correspondence in Manner a2. Details are not described herein again.

In this way, the first apparatus may determine the first correspondence based on the first information and the information #a. For example, the first apparatus may determine the plurality of first areas based on the information 1 to the information 5, and determine the first correspondence between the plurality of first areas and the plurality of SSBs based on the information 6, the information 7, and the first information. Optionally, when determining the first correspondence, the first apparatus may further refer to an ephemeris of the second apparatus. In other words, the first apparatus may determine the first correspondence based on the ephemeris of the second apparatus and the first information. For example, the first apparatus may determine the information 5 based on the ephemeris of the second satellite and the first information, to determine positions of the plurality of first areas, so as to determine the first correspondence.

**Step B2**: The first apparatus may determine the correspondence between the plurality of first areas and the C SSBs in the coverage range L based on the first correspondence and the second information.

For example, if the first correspondence is shown in FIG. 5A, and the indexes of the B SSBs indicated by the second information are {0, 16, 32, 208, 224, 240}, the first apparatus may determine that the correspondence between the plurality of first areas and the C SSBs in the coverage range L is the correspondence shown in FIG. 3A.

**S404**: The first apparatus detects (or measures or receives) an SSB corresponding to all or part of the plurality of first areas.

In some implementations, the first apparatus may detect, based on a position of the first apparatus, the SSB corresponding to all or part of the plurality of first areas. In some examples, the first apparatus may detect an SSB corresponding to an area in which the first apparatus is located. For example, the correspondence between each area and the SSB in the coverage range L is shown in FIG. 3A. If the first apparatus is located in an area corresponding to an SSB 136, the first apparatus may detect the SSB 136. In some other examples, the first apparatus may detect an SSB corresponding to an area in which the first apparatus is located and an SSB corresponding to an area adjacent to the area in which the first apparatus is located. For example, the correspondence between each area and the SSB in the coverage range L is shown in FIG. 3A. If the first apparatus is located in an area corresponding to an SSB 136, the first apparatus may detect the SSB 136, an SSB 119, an SSB 120, an SSB 121, an SSB 135, an SSB 137, an SSB 151, an SSB 152, and an SSB 153.

In some other implementations, the first apparatus may detect, based on a position of the first apparatus and movement information of the first apparatus, the SSB corresponding to all or part of the plurality of first areas. In some examples, if the first apparatus does not move, the first apparatus may detect an SSB corresponding to an area in which the first apparatus is located. For example, the correspondence between each area and the SSB in the coverage range L is shown in FIG. 3A. If the first apparatus is located in an area corresponding to an SSB 136, and the first apparatus does not move, the first apparatus may detect the SSB 136. In some other examples, if the first apparatus moves, the first apparatus may detect an SSB corresponding to an area in which the first apparatus is located and an SSB corresponding to a first neighboring area, where the first neighboring area is an area, adjacent to the area in which the first apparatus is located, in a movement direction of the first apparatus. For example, the correspondence between each area and the SSB in the coverage range L is shown in FIG. 3A. If the first apparatus is located in an area corresponding to an SSB 136, and the first apparatus moves toward an area corresponding to an SSB 137, the first apparatus may detect the SSB 136 and the SSB 137.

According to the method, the first apparatus may detect the SSB corresponding to the part of the plurality of first areas, so that a duration of measuring the SSB by the first apparatus can be reduced, power consumption of the first apparatus can be reduced, and overheads of measuring the SSB can be reduced.

Optionally, the first apparatus may further perform other processing based on the SSBs corresponding to the plurality of first areas in the coverage range L. For example, the first apparatus may combine, during access, system messages (for example, a SIB1, a SIB19, a SIB1bis, or OSI) corresponding to adjacent SSBs, to improve performance.

According to the method shown in FIG. 4, when there is an area in which no SSB is sent in the coverage range L, the first apparatus may accurately determine, based on the first information and the second information, the correspondence between each area and the SSB in the coverage range of the second apparatus, to determine coverage information of the area in which the first apparatus is located and coverage information around the area. In this way, mobility management performance can be improved, accurate SSB measurement can be implemented, and measurement overheads can be reduced. For example, in an SMTC window delivered by a network side, the first apparatus may determine the coverage information of the area in which the first apparatus is located and the coverage information around the area, and measure the SSB corresponding to the area in which the first apparatus is located and/or an SSB corresponding to an area around the area, to implement accurate SSB measurement and reduce measurement overheads. In addition, if system information associated with different SSB indexes is the same, the first apparatus may combine system information corresponding to different SSB indexes or system information associated with SSB indexes corresponding to geographically adjacent areas, so that accuracy of system information obtained through parsing can be improved, time for obtaining a system message can be reduced, and an access latency can be reduced.

In some possible manners, when the second information indicates, in Manner a2 or Manner a3, the at least one bit corresponding to the at least one SSB, the method shown in FIG. 4 may further include the following steps.

**S405**: The first apparatus determines fourth information based on the second information. In other words, the second information may be used to determine the fourth information.

The fourth information may indicate one group of bits in the M groups of bits, the one group of bits indicated by the fourth information may indicate D SSBs that are not transmitted among the A SSBs in a coverage range P of the second apparatus, and D is a positive integer. A second time period in which the second apparatus covers the coverage range P may be later than the first time period in which the second apparatus covers the coverage range L, and A may be a quantity of areas in the coverage range P. For specific content of the fourth information, refer to the descriptions of the second information in S402. Details are not repeated.

Optionally, the first apparatus may determine the fourth information based on the second information and K. In other words, the second information and K may be used to determine the fourth information. K is determined based on a quantity of areas spanned by the second apparatus from the first time period to the second time period. In other words, the first apparatus may determine K based on the quantity of areas spanned by the second apparatus from the first time period to the second time period. For example, as shown in the topmost figure in FIG. 2B, if in the first time period, the coverage range of the second apparatus is bottommost eight rows of areas, and in the second time period, the coverage area of the second apparatus is topmost eight rows of areas, the quantity of areas spanned by the second apparatus from the first time period to the second time period may be 1.

Because the quantity of areas may be determined based on start time of the first time period, a duration of the first time period, and the first correspondence, K may be determined based on the start time of the first time period, the duration of the first time period, and the first correspondence. For example, K may satisfy one of Formula (1) to Formula (5). In this way, the first apparatus may determine K according to one of Formula (1) to Formula (5): $K = floor \left(\left(t-t0\right)/Δt\right) mod M ,$ Formula (1) $K = \left(floor\left(\left(t-t0\right)/Δt\right)+1\right) mod M ,$ Formula (2) $K = roundup \left(\left(t-t0\right)/Δt\right) mod M ,$ Formula (3) $K = \left(roundup\left(\left(t-t0\right)/Δt\right)-1\right) mod M ,$ Formula (4) $K = round \left(\left(t-t0\right)/Δt\right) mod M ,$ Formula (5)
t is a time point in the second time period, t0 is a start moment of the first time period, Δt is the duration of the first time period, floor represents a rounding-down operation, roundup represents a rounding-up operation, round represents a rounding-off operation, and mod represents a modulo operation.

The following uses an example in which K satisfies Formula (1), to describe a manner of determining K. For example, if M is 8, Δt is 9 seconds, t0 is a 0^{th} second, and t is a 10^{th} second, K=floor((t-t0)/Δt) mod M=floor((10-0)/9) mod 8=1 mod 8=1.

In some examples, the M groups of bits may be shown in Table 1. If the value of the second information is 0, and K is 1, a value of the fourth information may be 1, and the group of bits indicated by the fourth information may be a group of bits corresponding to the 2^{nd} piece of indication information (that is, 1) in Table 1: 000010...00001.

In some other examples, the M groups of bits may be shown in Table 2. If K is 1, the group of bits indicated by the fourth information may be a group of bits corresponding to the index 1 in Table 2: 000010...00001.

In this manner, the first apparatus may accurately determine the fourth information based on the second information and K.

**S406**: The first apparatus may determine, based on the first information and the fourth information, SSBs corresponding to a plurality of second areas in the coverage range P.

**S407**: The first apparatus may detect an SSB corresponding to all or part of the plurality of second areas.

For specific content of S406 and S407, refer to S403 and S404, provided that the second information is replaced with the fourth information, the coverage range L is replaced with the coverage range P, and the first area is replaced with the second area. Details are not described herein again.

For example, the coverage range L may be shown in FIG. 3A, and the coverage range P may be shown in FIG. 3C. The quantity of areas spanned by the second apparatus from the first time period to the second time period may be 1. In S405, the first apparatus may determine the fourth information based on the second information and K, where indexes of the D SSBs indicated by the fourth information may be {0, 224, 240}. In S406, the first apparatus may determine, based on the second information and the fourth information, that indexes of the SSBs (referred to as E SSBs below, where E is a positive integer) corresponding to the plurality of second areas in the coverage range P are {1, 6, 7, 8, 9, 14, 15, ..., 241, 246, 247, 248, 249, 254, 255}. In this way, the first apparatus may determine that a correspondence between the plurality of second areas and the E SSBs in the coverage range P is the correspondence shown in FIG. 3C. In S407, the first apparatus may detect, based on the correspondence shown in FIG. 3C, the SSB corresponding to all or part of the plurality of second areas.

According to the method, when the coverage range of the second apparatus changes with time, the first apparatus may obtain M groups of bits, and the M groups of bits may respectively indicate SSBs that are not transmitted in coverage ranges of the second apparatus in different time periods. In this way, the second apparatus may not need to send a plurality of groups of updated SSB bitmaps, thereby reducing signaling overheads, and reducing receive power of the first apparatus.

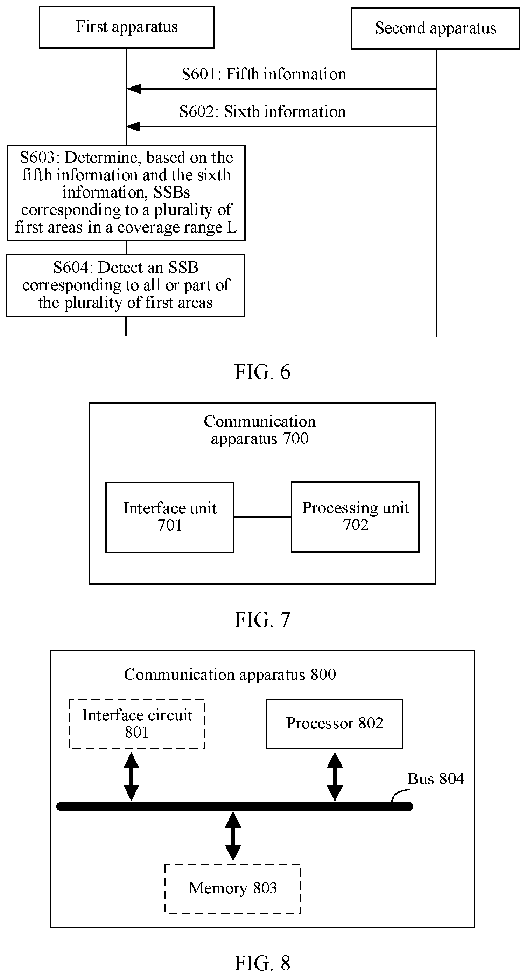

Embodiments of this application provide another communication method. FIG. 6 is a schematic flowchart corresponding to a communication method according to an embodiment of this application. In FIG. 6, the method is illustrated by using an example in which a first apparatus and a second apparatus are used as execution entities of interaction illustration. However, the execution entities of the interaction illustration are not limited in this application. For example, the first apparatus may be a terminal, or may be a module used in the terminal, for example, a circuit, a chip, a chip system, or a processor, or may be a logical node, a logical module, or software that can implement all or part of functions of the terminal; and the second apparatus may be an access network device (for example, a satellite), or may be a module used in the access network device (for example, the satellite), for example, a circuit, a chip, a chip system, or a processor, or may be a logical node, a logical module, or software that can implement all or part of functions of the access network device (for example, the satellite). As shown in FIG. 6, the method includes the following steps.

**S601**: The second apparatus may send fifth information to the first apparatus, and correspondingly, the first apparatus may receive the fifth information from the second apparatus.

The fifth information may indicate A SSBs, A may be a quantity of areas in a coverage range L of the second apparatus, and A is an integer greater than or equal to 2. For specific content of the A SSBs, refer to the descriptions of the A SSBs in S401. Details are not described herein again.

Optionally, the fifth information may indicate a plurality of bits corresponding to a plurality of SSBs, the plurality of SSBs may include the A SSBs, and bit statuses of A bits in the plurality of bits may indicate the A SSBs. For specific content in which the fifth information indicates the plurality of bits corresponding to the plurality of SSBs, refer to the descriptions in S401 that the first information may indicate the plurality of bits corresponding to the plurality of SSBs, provided that the first information is replaced with the fifth information. Details are not repeated.

In some implementations, the fifth information may be new information. For example, the fifth information may be included in a new parameter, and a name of the new parameter is, for example, an ssb-AllCoverageMap parameter, or the new parameter has another name. This is not limited in this application.

Optionally, the fifth information may be carried in broadcast information sent by the second apparatus, and the broadcast information is, for example, RRC signaling such as system information. The system information may be a conventional system information block, for example, a SIB1, a SIB19, or OSI; or the system information may be a new system information block, for example, a SIB1bis.

**S602**: The second apparatus may send sixth information to the first apparatus, and correspondingly, the first apparatus may receive the sixth information from the second apparatus.

The sixth information may indicate C SSBs that are transmitted among the A SSBs in the coverage range L, and C is a positive integer. In other words, the sixth information may indicate the C SSBs, in the A SSBs, that correspond to areas (for example, areas outside an electric fence in the coverage range L) in which SSBs can be transmitted in the coverage range L. For example, if a correspondence between each area and an SSB in the coverage range L is shown in FIG. 3A, indexes of the C SSBs may be {1, 6, 7, 8, 9, 14, 15, ..., 241, 246, 247, 248, 249, 254, 255}.

Optionally, the sixth information may indicate at least one bit corresponding to at least one SSB, the at least one SSB may include the C SSBs, and bit statuses of C bits in the at least one bit may indicate the C SSBs. The at least one SSB may be in a plurality of forms, for example, may be the plurality of SSBs in S601, or may be the A SSBs. This is not limited in this application. For example, a third bit is any one of the at least one bit. If a value of the third bit is a value #5 (for example, 1), it indicates that an SSB corresponding to the third bit belongs to the C SSBs. If a value of the third bit is a value #6 (for example, 0), it indicates that an SSB corresponding to the third bit does not belong to the C SSBs. For example, if the correspondence between each area and the SSB in the coverage range L is shown in FIG. 3A, and the value #5 is 1, the at least one bit indicated by the sixth information may be {0100001111000011...0100001111000011}, indicating that the indexes of the C SSBs may be {1, 6, 7, 8, 9, 14, 15, ..., 241, 246, 247, 248, 249, 254, 255}. In this manner, the sixth information may accurately indicate the C SSBs.

Optionally, the sixth information may be carried in broadcast information sent by the second apparatus, and the broadcast information is, for example, system information or RRC signaling. The system information may be a conventional system information block, for example, a SIB1, a SIB19, or OSI; or the system information may be a new system information block, for example, a SIB1bis.

A sequence of S601 and S602 is not limited in this application. The fifth information and the sixth information may be carried in a same message, or may be carried in different messages. This is not limited in this application.

**S603**: The first apparatus may determine, based on the fifth information and the sixth information, SSBs corresponding to a plurality of first areas in the coverage range L.

For example, if the correspondence between each area and the SSB in the coverage range L is shown in FIG. 3A, the first apparatus may determine, based on the fifth information, that indexes of the A SSBs may be {0, 1, 6, 7, 8, 9, 14, 15, ..., 240, 241, 246, 247, 248, 249, 254, 255}, and determine, based on the sixth information, that the indexes of the C SSBs may be {1, 6, 7, 8, 9, 14, 15, ..., 241, 246, 247, 248, 249, 254, 255}. Then, the first apparatus may determine that indexes of the SSBs (that is, the C SSBs) corresponding to the plurality of first areas in the coverage range L are {1, 6, 7, 8, 9, 14, 15, ..., 241, 246, 247, 248, 249, 254, 255}.

Optionally, the first apparatus may determine a correspondence between the plurality of first areas and the C SSBs in the coverage range L based on the fifth information and the sixth information. The following describes, by using step C1 and step C2, an example of a manner in which the first apparatus may determine the correspondence between the plurality of first areas and the C SSBs in the coverage range L based on the fifth information and the sixth information.

**Step C1**: The first apparatus may determine a first correspondence based on the fifth information. The first correspondence may be a correspondence between the A SSBs and A first areas in the coverage range L.

For specific content of step C1, refer to step B1, provided that the first information is replaced with the fifth information. Details are not described herein again.

**Step C2**: The first apparatus may determine the correspondence between the plurality of first areas and the C SSBs in the coverage range L based on the first correspondence and the sixth information.

For example, if the first correspondence is shown in FIG. 5A, and the indexes of the C SSBs indicated by the sixth information are {1, 6, 7, 8, 9, 14, 15, ..., 241, 246, 247, 248, 249, 254, 255}, the first apparatus may determine that the correspondence between the plurality of first areas and the C SSBs in the coverage range L is the correspondence shown in FIG. 3A.

**S604**: The first apparatus may detect an SSB corresponding to all or part of the plurality of first areas.

For specific content of S604, refer to S404. Details are not described herein again.

According to the method shown in FIG. 6, when there is an area in which no SSB is sent in the coverage range L, the first apparatus may accurately determine, based on the fifth information and the sixth information, the correspondence between each area and the SSB in the coverage range of the second apparatus, to determine coverage information of an area in which the first apparatus is located and coverage information around the area. In this way, mobility management performance can be improved, accurate SSB measurement can be implemented, and measurement overheads can be reduced. For example, in an SMTC window delivered by a network side, the first apparatus may determine the coverage information of the area in which the first apparatus is located and the coverage information around the area, and measure an SSB corresponding to the area in which the first apparatus is located and/or an SSB corresponding to an area around the area, to implement accurate SSB measurement and reduce measurement overheads. In addition, if system information associated with different SSB indexes is the same, the first apparatus may combine system information corresponding to different SSB indexes or system information associated with SSB indexes corresponding to geographically adjacent areas, so that accuracy of system information obtained through parsing can be improved, time for obtaining a system message can be reduced, and an access latency can be reduced.

Based on a same technical concept as the foregoing method embodiments, embodiments of this application provide corresponding communication apparatuses, and the communication apparatuses may be configured to perform functions of related steps in the foregoing method embodiments. The functions may be implemented by hardware, may be implemented by software, or may be implemented by hardware executing corresponding software. The hardware or the software includes one or more modules corresponding to the functions. The communication apparatus may be a terminal, or may be a module (for example, a circuit or a chip) in the terminal, or may be a logical node, a logical module, or software that can implement all or part of functions of the terminal or an access network device. Alternatively, the communication apparatus may be an access network device or a module (for example, a circuit or a chip) in the access network device, or may be a logical node, a logical module, or software that can implement all or part of functions of the access network device.

In a possible implementation, a structure of a communication apparatus provided in an embodiment of this application is shown in FIG. 7, and includes a processing unit 702. Optionally, the communication apparatus further includes an interface unit 701. The following describes functions of various units in the communication apparatus 700.

The interface unit 701 is configured to input and/or output information. Inputting information may be replaced with receiving information, and outputting information may be replaced with sending information. When outputting the information, the interface unit 701 may output the information to an apparatus other than the communication apparatus 700, or may output the information to another unit in the communication apparatus 700. In some manners, the interface unit 701 may be implemented through at least one of a physical interface, a communication module, a communication interface, and an input/output interface. In some other manners, the interface unit 701 may be implemented through an interface circuit, for example, a mobile communication module. The mobile communication module may include one or more of at least one antenna, at least one filter, a switch, a power amplifier, a low noise amplifier (low noise amplifier, LNA), and the like.

The processing unit 702 may be configured to support the communication apparatus 700 in performing processing actions in the foregoing method embodiments. The processing unit 702 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an implementation, the communication apparatus 700 is used in the first apparatus in the embodiment of this application shown in FIG. 4. The following describes specific functions of the processing unit 702 in this implementation.

The processing unit 702 is configured to: receive first information from a second apparatus through the interface unit 701, where the first information indicates A SSBs, A is a quantity of areas in a coverage range L of the second apparatus, and A is an integer greater than or equal to 2; receive second information from the second apparatus through the interface unit 701, where the second information indicates B SSBs that are not transmitted among the A SSBs in the coverage range L, and B is a positive integer; determine, based on the first information and the second information, SSBs corresponding to a plurality of first areas in the coverage range L; and detect an SSB corresponding to all or part of the plurality of first areas.

In some possible manners, the processing unit 702 is further configured to: when a correspondence between the A areas and the A SSBs in the coverage range of the second apparatus is variable, receive third information from the second apparatus through the interface unit 701, where the third information indicates a correspondence between M groups of bits and M pieces of indication information, M is a quantity of areas in the coverage range L along the first direction, the first direction is a movement direction of the second apparatus, an i^{th} piece of indication information in the M pieces of indication information indicates a correspondence between A areas i and the A SSBs, the A areas i are A areas in a coverage range of the second apparatus in a time period i, a value of i is any integer from 1 to M, the second information is one of the M pieces of indication information, and at least one bit is one group of bits in the M groups of bits that corresponds to the second information.

Optionally, the processing unit 702 is further configured to: determine fourth information based on the second information, where the fourth information indicates one group of bits in the M groups of bits, the one group of bits indicated by the fourth information indicates D SSBs that are not transmitted among the A SSBs in a coverage range P of the second apparatus, D is a positive integer, a second time period in which the second apparatus covers the coverage range P is later than a first time period in which the second apparatus covers the coverage range L, and A is a quantity of areas in the coverage range P; determine, based on the first information and the fourth information, SSBs corresponding to a plurality of second areas in the coverage range P; and detect an SSB corresponding to all or part of the plurality of second areas.

For example, the processing unit 702 is specifically configured to determine the fourth information based on the second information and K, where K is determined based on a quantity of areas spanned by the second apparatus from the first time period to the second time period.

In another implementation, the communication apparatus 700 is used in the second apparatus in the embodiment of this application shown in FIG. 4. The following describes specific functions of the processing unit 702 in this implementation.

The processing unit 702 is configured to: send first information through the interface unit 701, where the first information indicates A SSBs, A is a quantity of areas in a coverage range L of the second apparatus, and A is an integer greater than or equal to 2; and send second information through the interface unit 701, where the second information indicates B SSBs that are not transmitted among the A SSBs in the coverage range L, B is a positive integer, and the first information and the second information are used to determine SSBs corresponding to a plurality of first areas in the coverage range L.

In some possible manners, the processing unit 702 is further configured to: when a correspondence between the A areas and the A SSBs in the coverage range of the second apparatus is variable, send third information to a first apparatus through the interface unit 701, where the third information indicates a correspondence between M groups of bits and M pieces of indication information, M is a quantity of areas in the coverage range L along a first direction, the first direction is a movement direction of the second apparatus, an i^{th} piece of indication information in the M pieces of indication information indicates a correspondence between A areas i and the A SSBs, the A areas i are A areas in a coverage range of the second apparatus in a time period i, a value of i is any integer from 1 to M, the second information is one of the M pieces of indication information, and at least one bit is one group of bits in the M groups of bits that corresponds to the second information.

In still another implementation, the communication apparatus 700 is used in the first apparatus in the embodiment of this application shown in FIG. 6. The following describes specific functions of the processing unit 702 in this implementation.

The processing unit 702 is configured to: receive fifth information from a second apparatus through the interface unit 701, where the fifth information indicates A SSBs, A is a quantity of areas in a coverage range L of the second apparatus, and A is an integer greater than or equal to 2; receive sixth information from the second apparatus through the interface unit 701, where the sixth information indicates C SSBs that are transmitted among the A SSBs in the coverage range L, and C is a positive integer; determine, based on the fifth information and the sixth information, SSBs corresponding to a plurality of first areas in the coverage range L; and detect an SSB corresponding to all or part of the plurality of first areas.

In still another implementation, the communication apparatus 700 is used in the second apparatus in the embodiment of this application shown in FIG. 6. The following describes specific functions of the processing unit 702 in this implementation.

The processing unit 702 is configured to: send fifth information to a first apparatus through the interface unit 701, where the fifth information indicates A SSBs, A is a quantity of areas in a coverage range L of the second apparatus, and A is an integer greater than or equal to 2; and send sixth information to the first apparatus through the interface unit 701, where the sixth information indicates C SSBs that are transmitted among the A SSBs in the coverage range L, C is a positive integer, and the fifth information and the sixth information are used to determine SSBs corresponding to a plurality of first areas in the coverage range L.

For more detailed descriptions of the processing unit 702 and the interface unit 701, directly refer to the related descriptions in the method embodiments shown in FIG. 4 and FIG. 6. Details are not described herein.

It should be noted that, in the foregoing embodiments of this application, division into the modules is an example, is merely logical function division, and may be other division in actual implementation. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or part of the technical solutions may be implemented in a form of a software product. The computer software product is stored in a storage medium and includes several instructions for instructing a computer device (which may be a personal computer, a server, a network device, or the like) or a processor (processor) to perform all or part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 8. The communication apparatus 800 includes a processor 802. Optionally, the communication apparatus 800 further includes an interface circuit 801 and a memory 803. The interface circuit 801, the processor 802, and the memory 803 are coupled to each other.

Optionally, the interface circuit 801, the processor 802, and the memory 803 are coupled to each other through a bus 804. The bus 804 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used for representation in FIG. 8, but this does not mean that there is only one bus or only one type of bus.

The interface circuit 801 is configured to input and/or output information. Inputting information may be replaced with receiving information, and outputting information may be replaced with sending information. When outputting the information, the interface circuit 801 may output the information to an apparatus other than the communication apparatus 800, or may output the information to another unit in the communication apparatus 800. For example, the interface circuit 801 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 802 may be configured to support the communication apparatus 800 in performing processing actions in the foregoing method embodiments. When the communication apparatus 800 is configured to implement the foregoing method embodiments, the processor 802 may be further configured to implement a function of the processing unit 702. The processor 802 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor.

In an implementation, the communication apparatus 800 is used in the first apparatus in the embodiment of this application shown in FIG. 4. The following describes specific functions of the processor 802 in this implementation.

The processor 802 is configured to: receive first information from a second apparatus through the interface circuit 801, where the first information indicates A SSBs, A is a quantity of areas in a coverage range L of the second apparatus, and A is an integer greater than or equal to 2; receive second information from the second apparatus through the interface circuit 801, where the second information indicates B SSBs that are not transmitted among the A SSBs in the coverage range L, and B is a positive integer; determine, based on the first information and the second information, SSBs corresponding to a plurality of first areas in the coverage range L; and detect an SSB corresponding to all or part of the plurality of first areas.

In another implementation, the communication apparatus 800 is used in the second apparatus in the embodiment of this application shown in FIG. 4. The following describes specific functions of the processor 802 in this implementation.

The processor 802 is configured to: send first information through the interface circuit 801, where the first information indicates A SSBs, A is a quantity of areas in a coverage range L of the second apparatus, and A is an integer greater than or equal to 2; and send second information through the interface circuit 801, where the second information indicates B SSBs that are not transmitted among the A SSBs in the coverage range L, B is a positive integer, and the first information and the second information are used to determine SSBs corresponding to a plurality of first areas in the coverage range L.

In still another implementation, the communication apparatus 800 is used in the first apparatus in the embodiment of this application shown in FIG. 6. The following describes specific functions of the processor 802 in this implementation.

The processor 802 is configured to: receive fifth information from a second apparatus through the interface circuit 801, where the fifth information indicates A SSBs, A is a quantity of areas in a coverage range L of the second apparatus, and A is an integer greater than or equal to 2; receive sixth information from the second apparatus through the interface circuit 801, where the sixth information indicates C SSBs that are transmitted among the A SSBs in the coverage range L, and C is a positive integer; determine, based on the fifth information and the sixth information, SSBs corresponding to a plurality of first areas in the coverage range L; and detect an SSB corresponding to all or part of the plurality of first areas.

In still another implementation, the communication apparatus 800 is used in the second apparatus in the embodiment of this application shown in FIG. 6. The following describes specific functions of the processor 802 in this implementation.

The processor 802 is configured to: send fifth information to a first apparatus through the interface circuit 801, where the fifth information indicates A SSBs, A is a quantity of areas in a coverage range L of the second apparatus, and A is an integer greater than or equal to 2; and send sixth information to the first apparatus through the interface circuit 801, where the sixth information indicates C SSBs that are transmitted among the A SSBs in the coverage range L, C is a positive integer, and the fifth information and the sixth information are used to determine SSBs corresponding to a plurality of first areas in the coverage range L.

For a specific function of the processor 802, refer to the descriptions in the communication method provided in the foregoing embodiments and examples of this application, and the specific function descriptions of the communication apparatus 700 in the embodiment of this application shown in FIG. 7. Details are not described herein again.

The memory 803 is configured to store program instructions, data, and/or the like. Specifically, the program instructions may include program code, and the program code includes computer operation instructions. The memory 803 may include a RAM, and may further include a non-volatile memory (non-volatile memory), for example, at least one magnetic disk storage. The processor 802 executes the program instructions stored in the memory 803, and implements the foregoing function by using the data stored in the memory 803, to implement the communication method provided in the foregoing embodiments of this application. The memory 803 may be integrated with the processor 802, or may be a memory outside the communication apparatus.

It may be understood that the memory 803 in FIG. 8 in this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a disk storage medium or another disk storage device, or any other medium that can be used to carry or store expected program code in a form of an instruction or a data structure and that can be accessed by the computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete device.

In various embodiments of this application, unless otherwise specified or there is a logic conflict, terms and/or descriptions of different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. Therefore, this application is intended to cover these modifications and variations of this application if they fall within the scope of the claims of this application and equivalent technologies thereof.

## Claims

1. A communication method, comprising:
receiving, by a first apparatus, first information from a second apparatus, wherein the first information indicates A synchronization signal and physical broadcast channel PBCH blocks SSBs coverage range L of the second apparatus, and A is an integer greater than or equal to 2;
receiving, by the first apparatus, second information from the second apparatus, wherein the second information indicates B SSBs that are not transmitted among the A SSBs in the coverage range L, and B is a positive integer;
determining, by the first apparatus based on the first information and the second information, SSBs corresponding to a plurality of first areas in the coverage range L; and
detecting, by the first apparatus, SSBs corresponding to all or part of the plurality of first areas.

2. The method according to claim 1, wherein the first information indicates a plurality of bits corresponding to a plurality of SSBs, the plurality of SSBs comprise the A SSBs, and bit statuses of A bits in the plurality of bits indicate the A SSBs.

3. The method according to claim 1 or 2, wherein the second information indicates at least one bit corresponding to at least one SSB, the at least one SSB comprises the B SSBs, and bit statuses of B bits in the at least one bit indicate the B SSBs.

4. The method according to claim 3, wherein when a correspondence between the A areas and the A SSBs in the coverage range of the second apparatus is variable, the method further comprises:
receiving, by the first apparatus, third information from the second apparatus, wherein the third information indicates a correspondence between M groups of bits and M pieces of indication information, M is a quantity of areas in the coverage range L along a first direction, the first direction is a movement direction of the second apparatus, an i^{th} piece of indication information in the M pieces of indication information indicates a correspondence between A areas i and the A SSBs, the A areas i are A areas in a coverage range of the second apparatus in a time period i, and a value of i is any integer from 1 to M; and
that the second information indicates the at least one bit corresponding to the at least one SSB comprises:
the second information is one of the M pieces of indication information, and the at least one bit is one group of bits in the M groups of bits that corresponds to the second information.

5. The method according to claim 3, wherein when a correspondence between the A areas and the A SSBs in the coverage range of the second apparatus remains unchanged, that the second information indicates the at least one bit corresponding to the at least one SSB comprises:
the second information indicates M groups of bits, M is a quantity of areas in the coverage range L along a first direction, the first direction is a movement direction of the second apparatus, the M groups of bits correspond to M time periods in chronological order, and the at least one bit is one group of bits in the M groups of bits that corresponds to an earliest time period in the M time periods.

6. The method according to claim 4 or 5, further comprising:
determining, by the first apparatus based on the second information, fourth information, wherein the fourth information indicates one group of bits in the M groups of bits, the one group of bits indicated by the fourth information indicates D SSBs that are not transmitted among the A SSBs in a coverage range P of the second apparatus, D is a positive integer, a second time period in which the second apparatus covers the coverage range P is later than a first time period in which the second apparatus covers the coverage range L, and A is a quantity of areas in the coverage range P;
determining, by the first apparatus based on the first information and the fourth information, SSBs corresponding to a plurality of second areas in the coverage range P; and
detecting, by the first apparatus, an SSB corresponding to all or part of the plurality of second areas.

7. The method according to claim 6, wherein the determining, by the first apparatus based on the second information, the fourth information comprises:
determining, by the first apparatus based on the second information and K, the fourth information, wherein K is determined based on a quantity of areas spanned by the second apparatus from the first time period to the second time period.

8. A communication method, comprising:
sending, by a second apparatus, first information to a first apparatus, wherein the first information indicates A synchronization signal and physical broadcast channel PBCH blocks SSBs, A is a quantity of areas in a coverage range L of the second apparatus, and A is an integer greater than or equal to 2; and
sending, by the second apparatus, second information to the first apparatus, wherein the second information indicates B SSBs that are not transmitted among the A SSBs in the coverage range L, and B is a positive integer, wherein
the first information and the second information are used to determine SSBs corresponding to a plurality of first areas in the coverage range L.

9. The method according to claim 8, wherein the first information indicates a plurality of bits corresponding to a plurality of SSBs, the plurality of SSBs comprise the A SSBs, and bit statuses of A bits in the plurality of bits indicate the A SSBs.

10. The method according to claim 8 or 9, wherein the second information indicates at least one bit corresponding to at least one SSB, the at least one SSB comprises the B SSBs, and bit statuses of B bits in the at least one bit indicate the B SSBs.

11. The method according to claim 10, wherein when a correspondence between the A areas and the A SSBs in the coverage range of the second apparatus is variable, the method further comprises:
sending, by the second apparatus, third information to the first apparatus, wherein the third information indicates a correspondence between M groups of bits and M pieces of indication information, M is a quantity of areas in the coverage range L along a first direction, the first direction is a movement direction of the second apparatus, an i^{th} piece of indication information in the M pieces of indication information indicates a correspondence between A areas i and the A SSBs, the A areas i are A areas in a coverage range of the second apparatus in a time period i, and a value of i is any integer from 1 to M; and
that the second information indicates the at least one bit corresponding to the at least one SSB comprises:
the second information is one of the M pieces of indication information, and the at least one bit is one group of bits in the M groups of bits that corresponds to the second information.

12. The method according to claim 10, wherein when a correspondence between the A areas and the A SSBs in the coverage range of the second apparatus remains unchanged, that the second information indicates the at least one bit corresponding to the at least one SSB comprises:
the second information indicates M groups of bits, M is a quantity of areas in the coverage range L along a first direction, the first direction is a movement direction of the second apparatus, the M groups of bits correspond to M time periods in chronological order, and the at least one bit is one group of bits in the M groups of bits that corresponds to an earliest time period in the M time periods.

13. The method according to claim 11 or 12, wherein
the second information is used to determine fourth information, the fourth information indicates one group of bits in the M groups of bits, the one group of bits indicated by the fourth information indicates D SSBs that are not transmitted among the A SSBs in a coverage range P of the second apparatus, D is a positive integer, a second time period in which the second apparatus covers the coverage range P is later than a first time period in which the second apparatus covers the coverage range L, and A is a quantity of areas in the coverage range P; and
the first information and the fourth information are used to determine SSBs corresponding to a plurality of second areas in the coverage range P.

14. The method according to claim 13, wherein that the second information is used to determine the fourth information comprises:
the second information and K are used to determine the fourth information, wherein K is determined based on a quantity of areas spanned by the second apparatus from the first time period to the second time period.

15. A communication method, comprising:
receiving, by a first apparatus, fifth information from a second apparatus, wherein the fifth information indicates A synchronization signal and physical broadcast channel PBCH blocks SSBs, A is a quantity of areas in a coverage range L of the second apparatus, and A is an integer greater than or equal to 2;
receiving, by the first apparatus, sixth information from the second apparatus, wherein the sixth information indicates C SSBs that are transmitted among the A SSBs in the coverage range L, and C is a positive integer;
determining, by the first apparatus based on the fifth information and the sixth information, SSBs corresponding to a plurality of first areas in the coverage range L; and
detecting, by the first apparatus, an SSB corresponding to all or part of the plurality of first areas.

16. The method according to claim 15, wherein the fifth information indicates a plurality of bits corresponding to a plurality of SSBs, the plurality of SSBs comprise the A SSBs, and bit statuses of A bits in the plurality of bits indicate the A SSBs.

17. The method according to claim 15 or 16, wherein the sixth information indicates at least one bit corresponding to at least one SSB, the at least one SSB comprises the C SSBs, and bit statuses of C bits in the at least one bit indicate the C SSBs.

18. A communication method, comprising:
sending, by a second apparatus, fifth information to a first apparatus, wherein the fifth information indicates A synchronization signal and physical broadcast channel PBCH blocks SSBs, A is a quantity of areas in a coverage range L of the second apparatus, and A is an integer greater than or equal to 2; and
sending, by the second apparatus, sixth information to the first apparatus, wherein the sixth information indicates C SSBs that are transmitted among the A SSBs in the coverage range L, and C is a positive integer, wherein
the fifth information and the sixth information are used to determine SSBs corresponding to a plurality of first areas in the coverage range L.

19. The method according to claim 18, wherein the fifth information indicates a plurality of bits corresponding to a plurality of SSBs, the plurality of SSBs comprise the A SSBs, and bit statuses of A bits in the plurality of bits indicate the A SSBs.

20. The method according to claim 18 or 19, wherein the sixth information indicates at least one bit corresponding to at least one SSB, the at least one SSB comprises the C SSBs, and bit statuses of C bits in the at least one bit indicate the C SSBs.

21. A communication apparatus, comprising a unit configured to perform the method according to any one of claims 1 to 7, or comprising a unit configured to perform the method according to any one of claims 8 to 14, or comprising a unit configured to perform the method according to any one of claims 15 to 17, or comprising a unit configured to perform the method according to any one of claims 18 to 20.

22. A communication apparatus, comprising a processor, wherein the processor executes instructions, to cause the apparatus to perform the method according to any one of claims 1 to 7, or cause the apparatus to perform the method according to any one of claims 8 to 14, or cause the apparatus to perform the method according to any one of claims 15 to 17, or cause the apparatus to perform the method according to any one of claims 18 to 20.

23. A computer-readable storage medium, wherein the computer-readable storage medium stores a computer program or instructions, and when the computer program or the instructions are executed, the method according to any one of claims 1 to 20 is implemented.
